# EUROPÄISCHE PATENTSCHRIFT

(11) **EP 0 525 600 B1**
(45) Veröffentlichungstag und Bekanntmachung des Hinweises auf die Patenterteilung: **02.05.1997**
(21) Anmeldenummer: 92112475.6
(22) Anmeldetag: 21.07.1992
(51) Int. Cl.: H01R 4/60, H02G 9/06, F16L 25/00

(54) **Kabelschutzanordnung für oder an eine im Erdboden zu verlegende und an Gebäude, Ziehkästen oder dergleichen anschliessbare Leitungsanordnung**
Cable protecting device provided for a conduit system to be laid underground and to be connected to buildings, pulling boxes or the like
Dispositif de protection de câbles destiné à une installation de conduits à poser dans le sol et à connecter à des bâtiments, coffres de tirage ou similaires

(30) Priorität: 27.07.1991 DE 4124967; 27.07.1991 DE 4124968
(43) Veröffentlichungstag der Anmeldung: 03.02.1993
(73) Patentinhaber: DEHN + SÖHNE GMBH + CO. KG, D-90489 Nürnberg (DE)
(72) Erfinder: Wiesinger, Johannes, Prof. Dr. Ing., W-8039 Puchheim (DE); Hasse, Peter, Dr.-Ing., W-8430 Neumarkt/Opf. (DE); Hofmann, Oswald J., Ing., A-2380 Perchtoldsdorf (AT)
(74) Vertreter: Richter, Bernhard, Dipl.-Ing.

(56) Entgegenhaltungen:
- DE-A- 2 408 517
- DE-A- 2 710 620
- DE-A- 3 812 057
- US-A- 3 977 704
- US-A- 4 032 708

## Beschreibung

Die Erfindung betrifft eine Kabelschutzanordnung für oder an eine im Erdboden zu verlegende und an Gebäuden, Ziehkästen oder dergleichen anschließbare Leitungsanordnung, die aus mehreren miteinander, sowie mit den Gebäuden, Ziehkästen oder dergleichen mechanisch und elektrisch verbindbaren Leitungsabschnitten besteht, wobei der einzelne Leitungsabschnitt aus zumindest einem Kabelschutzrohr aus einem isolierenden Werkstoff, bevorzugt Kunststoff, und einem oder mehreren Leiter(n) oder Kabel(n) besteht, der bzw. die in das Kabelschutzrohr eingebracht oder eingezogen sind, wobei das Kabelschutzrohr mit einer elektrisch leitfähigen, metallenen und blitzstromtragfähigen Abschirmung versehen ist, die außenseitig von einer leitfähigen Schutzschicht umgeben ist (Oberbegriff des Anspruches 1). Eine solche Leitungsanordnung ist aus DE-A-38 12 057 bekannt. In dieser Vorveröffentlichung wird für die Abschirmung ein blitzstromtragfähiges Geflecht, z.B. aus Kupfer, angegeben. Ferner wird angegeben, daß eines der Enden des jeweiligen Kabelrohres so aufgeweitet ist, daß es über das andere, nicht aufgeweitete Ende des angrenzenden Kabelschutzrohres paßt. Ferner wird gesagt, daß die Abschirmung des einen Kabelschutzrohres querschnittsgleich in die Abschirmung des anderen, angrenzenden Kabelschutzrohres übergeht, und daß die Abschirmwirkung an einer solchen Verbindungsstelle nicht unterbrochen sein darf. Weitere Angaben über die Ausgestaltung dieser Verbindungen der Kabelschutzrohre und der Abschirmungen jedes Leitungsabschnittes und auch deren Anschluß an Gebäude, Ziehkästen oder dergleichen sind in der vorgenannten Literaturstelle jedoch nicht enthalten.

Aus DE-A-27 10 620 kennt man eine Schutzeinrichtung aus korrosionsfesten, metallenen Netzen für im Erdreich zu verlegende Schwachstromkabel, wobei diese Schutzeinrichtung als Faraday'scher Käfig für die Aufnahme der Kabel ausgebildet ist. Der relativ zu den Kabeln sehr große Käfig hat hierzu im Querschnitt eine U-Form, die an den Enden offen sind. Hinzu gehört eine flächenhafte Abdeckung. Sowohl die U-Form als auch die Abdeckung werden aus Netzen aus ferromagnetischem Material gebildet. Die Einzelstäbe der Netze sind an den Kreuzungspunkten elektrisch leitend miteinander verbunden. Hierbei ist nachteilig, daß die Gitterform des Käfigs keine vollständige Abschirmung mit sich bringt; es sei denn, daß man die Maschenweite des Gitters sehr klein wählt, was aber mit einem entsprechend hohen Fertigungsaufwand verbunden wäre. Der Inhalt dieser Literaturstelle gibt keinen Hinweis dahingehend, daß diese Abschirmung in Längsrichtung der Anordnung stromleitfähig ist. Insbesondere wird nicht die zur vorliegenden Erfindung gehörende blitzstromtragfähige Stromleitfähigkeit der Abschirmung in Längsrichtung der Kabelschutzrohre erwähnt.

Das gleiche gilt hinsichtlich der weiteren, nachstehend zu erläuternden Merkmale der Erfindung.

DE-A-24 085/7 beschreibt ein Kunststoffrohrsystem, wobei sich auf jedem Einsteckrohrteil und jedem Muffenrohrteil auf der Außenseite eine Deckschicht aus einem aufgespritzten Metall, wie Aluminium oder Blei, z.B. in einem mit dem PVC verträglichen Kusntstoffbindemittel befindet. Dieses Kunststoffrohrsystem ist nur auf einen elektrostatischen Schutz mit halbleitenden Schirmen abgestellt. Dazu sind Kohlenstoffpartikel im Kunststoff vorgesehen, um eine elektrostatische Leitfähigkeit zu gewährleisten. Außerdem betrifft diese Literaturstelle ein gegenüber der vorliegenden Erfindung ganz anderes Anwendungsgebiet, nämlich das Fördern trockener Medien wie Luft und mit Staubpartikeln angereicherter Luft.

Die Aufgabenstellung der Erfindung besteht demgegenüber darin, bei einer solchen Kabelschutzanordnung die Verbindung der Kabelschutzrohre eines Leitungsabschnittes untereinander, sowie das Anschließen solcher Leitungsabschnitte an Gebäude, Ziehkästen oder dergleichen in mechanisch robuster, leicht zu handhabender und elektrisch einwandfreier Art zu gestalten. Dabei soll eine durchgehende, blitzstromtragfähige Abschirmung gemäß der Lehre von DE-Δ-38 12 057 erhalten bleiben.

Zur Lösung dieser Aufgaben- bzw. Problemstellung ist zunächst, ausgehend vom eingangs zitierten Oberbegriff des Anspruches 1, nach der Erfindung vorgesehen, daß die elektrische Abschirmung jedes Kabelschutzrohres eine metallene, leitende und in ihren Abmessungen und spezifischen elektrischen Leitfähigkeit blitzstromtragfähige Folie ist, die von einem Außenmantel aus einem elektrisch leitenden Kunststoff umgeben ist, daß an den der Verbindung dienenden Endbereichen jedes Kabelschutzrohres der Mantel und die Abschirmung über eine Länge entfernt ist, die zumindest etwa zehnmal größer als die Wandstärke des Kabelschutzrohres ist, daß daran anschließend ein Teil des Mantels über einen kleineren Bereich zur Bildung einer zylinderförmigen Kontaktfläche entfernt ist, wobei die Kontaktfläche zur elektrischen Verbindung zum angrenzenden Kabelschutzrohr, Leitungsabschnitt oder Gebäude, Ziehkasten oder dergleichen dient, und daß Mittel zum entsprechenden Anschluß des freigelegten Bereiches der Abschirmung mit metallischen Abschirmungen vorgesehen sind (Kennzeichen des Anspruches 1). Metallene Folien sind wesentlich widerstandsfähiger als Geflechte. Dies ist sowohl für die Fertigung als vor allen Dingen auch für den in der Regel sehr rauhen Betrieb beim Transport oder auf der Baustelle wichtig. Dabei ist zu berücksichtigen, daß zweckmäßigerweise die Entfernung des o.g. Teiles des Außenmantels aus elektrisch leitendem Kunststoff fabrikseitig erfolgt, und somit die Leitungsabschnitte mit den freiliegenden Bereichen der Abschirmung transportiert und verlegt werden müssen. Die metallene Folie ist bevorzugt aus Kupfer. Sie kann aber auch aus einem anderen Metall wie Aluminium bestehen. Ferner ist eine Kontaktfläche geschaffen, bevorzugt in der Ausführung als ringförmiger, zylindrischer Abschnitt, die außer der vorerwähnten mechanischen Stabilität eine den Anforderungen der Blitzstromtragfähigkeit entsprechende Kontaktierbarkeit und Stromleitfähigkeit besitzt. Schließlich schafft die Anordnung nach der Erfindung mit der o.g. Verlängerung der Kabelschutzrohre nach außen eine genügend lange Gleitstrecke, welche Überschläge von der Kontaktfläche der Abschirmung zu den im jeweiligen Kabelschutzrohr befindlichen Leitungen verhindert. Vom Prinzip her ist die Schaffung einer derart langen Gleitstrecke Gegenstand von DE-A-38 12 057, jedoch nicht in der vorteilhaften baulichen Ausgestaltung nach der Erfindung, mit welcher das Kabelschutzrohr ohne Veränderung seines Durchmessers lediglich auf den angegebenen Längen von Mantel und Abschirmung freigelegt werden muß. Der Außenmantel dient der elektrischen Kontaktgabe zum Erdreich. Ferner schützt er die metallene Folie mechanisch und gegen Feuchtigkeit.

Alternativ zu der vorstehend erläuterten Kabelschutzanordnung des Anspruches 1 sieht die Erfindung zur Lösung der eingangs genannten Aufgabe zwei weitere Kabelschutzanordnungen vor.

Dies ist zunächst gemäß Anspruch 2 eine Kabelschutzanordnung für oder an eine im Erdboden zu verlegende und an Gebäude, Ziehkästen oder dergleichen anschließbare Leitungsanordnung, die aus mehreren miteinander, sowie mit den Gebäuden, Ziehkästen oder dergleichen mechanisch und elektrisch verbindbaren Leitungsabschnitten besteht, wobei der einzelne Leitungsabschnitt aus zumindest einem Kabelschutzrohr aus einem isolierenden Werkstoff, bevorzugt Kunststoff, und einem oder mehreren Leiter(n) oder Kabel(n) besteht, der bzw. die in das Kabelschutzrohr eingebracht oder eingezogen sind, wobei das Kabelschutzrohr außenseitig von einer elektrisch leitfähigen und blitzstromtragfähigen Abschirmung und von einer leitfähigen Schutzschicht umgeben ist, wobei diese Kabelschutzanordnung dadurch gekennzeichnet ist, daß eine gleich die Abschirmung und die Schutzschicht jedes Kabelschutzrohres bildende Schutzschicht aus einem hochleitfähigen Kunststoff vorgesehen ist, die in ihren Abmessungen und in ihrer spezifischen elektrischen Leitfähigkeit blitzstromtragfähig ausgebildet ist, daß an den der Verbindung dienenden Enden jedes Kabelschutzrohres ein Teil der vorgenannten Schutzschicht in der Form eines zylindrischen Abschnittes mit einer Länge entfernt ist, die zumindest etwa zehnmal größer als die Wandstärke des Kabelschutzrohres ist, und daß der an den schutzschichtfreien Bereich anschließende Endbereich der Schutzschicht als Kontaktfläche zur elektrischen Verbindung zum angrenzenden Kabelschutzrohr, Leitungsabschnitt, Gebäude, Ziehkasten oder dergleichen dient, wobei Mittel zum Anschluß dieses Endbereiches der Schutzschicht vorgesehen sind. Eine derartige Schutzschicht, die in sich die Funktionen der blitzstromtragfähigen Abschirmung, des mechanischen Schutzes und des Schutzes gegen Feuchtigkeit nach außen und schließlich die Funktion des leitfähigen Erdkontaktes übernimmt, ist mit wesentlich geringerem Aufwand auf das Kabelschutzrohr aufzubringen, als eine gesonderte Abschirmung und eine gesonderte Schutzschicht. Da auch die Schutzschicht nach Anspruch 2 der Erfindung zur Erzielung einer entsprechenden Robustheit und Festigkeit gegen äußere mechanische Einflüsse eine gewisse Dicke haben muß, erhält sie damit einen hinsichtlich der Blitzstromtragfähigkeit sogar überdimensionierten Querschnitt, wenn - was nach dem derzeitigen Stand der Technik möglich ist - sie aus einem hochleitfähigen Kunststoff mit der Leitfähigkeit von Kupfer besteht. Dieser hochleitfähige Kunststoff kann z.B. ein entsprechend leitfähiges Polyacethylen sein. Derartige hochleitfähige Kunststoffe sind in der Fachwelt auch als "organische Metalle" bekannt. Ein weiterer Vorteil besteht darin, daß somit auch die für den Anschluß von Kontakten dienenden Stellen der Schutzschicht mechanisch stabil und gegen Beschädigungen unempfindlich sind, was bei einer Abschirmung aus einem freiliegenden Geflecht gemäß dem Stand der Technik nicht der Fall wäre. Die vorgenannten Vorteile sind sowohl für die Fertigung, als auch vor allem für den in der Regel sehr rauhen Betrieb beim Transport oder auf der Baustelle wichtig. Hinzu kommt, daß für die Kontaktstellen ohne ein sonst notwendiges Abmanteln die Schutzschicht mit ihrer Außenfläche zur Verfügung steht. Die Kontaktierbarkeit und Stromleitfähigkeit von durch den Außenumfang der Schutzschicht gebildeten Kontaktstellen ist einwandfrei. Schließlich schafft diese Kabelschutzanordnung nach Anspruch 2 der Erfindung mit der o.g. Entfernung der Schutzschicht über eine gewisse Länge des Kabelschutzrohres an deren Enden und den Enden des Leitungsabschnittes ebenfalls eine genügend lange Gleitstrecke, welche Überschläge von der Kontaktfläche der Schutzschicht zu den im Kabelschutzrohr bzw. Leitungsabschnitt befindlichen Leitungen verhindert.

Vom Prinzip her ist die Schaffung einer derart langen Gleitstrecke zwar bereits Gegenstand von DE-A-38 12 057, jedoch nicht in der vorteilhaften baulichen Ausgestaltung nach der Erfindung, mit welcher das Kabelschutzrohr ohne Veränderung seines Durchmessers lediglich auf der angegebenen Länge von der Schutzschicht freigelegt werden muß. Analoges gilt für die entsprechende Ausgestaltung der Anordnung nach Anspruch 1.

Die Merkmale des Anspruches 3 sehen eine vorteilhafte Kombination des elektrischen Anschlusses und der mechanischen Verbindung der Kontaktstellen in Gestalt eines einzigen Mittels, z.B. einer Rohrschelle, vor.

Die Merkmale des Anspruches 4 beinhalten eine bevorzugte, muffenartige Verbindung nach der Erfindung zwischen den einander gegenüberliegenden Enden der Kabelschutzrohre zweier Leitungsabschnitte. Damit wird, im Gegensatz zur eingangs genannten Ausführung nach DE-A-38 12 057, erreicht, daß die Kabelschutzrohre an beiden Enden den gleichen Durchmesser haben können. Dies ist sowohl für die Fertigung, als auch für die Montage eine wesentliche Vereinfachung und Erleichterung. Auch ist für eine durchgehende, nicht unterbrochene Abschirmung gesorgt, einschließlich mechanisch fester und elektrisch hinreichender Verbindungen der genannten Folien, wobei die aus der Muffe herausragenden Anschlüsse der Kontaktierung der freigelegten Bereiche der Abschirmungen (Anspruch 1) oder der Schutzschicht (Anspruch 2) der Kabelschutzrohre dienen. Sowohl die Kabelschutzrohre, als auch die Muffen sind in der erläuterten Form ab Fabrik lieferbar. Bauseitig müssen lediglich noch die Enden der Kabelschutzrohre in die Muffe eingeführt und die Schellen oder dergleichen Verbindungsmittel angelegt und festgemacht werden. Die Muffe selber hat zum einen die Funktion der unterbrechungsfreien Durchführung der elektrischen Abschirmung und bewirkt außerdem zugleich die erforderliche Stabilität der Steckverbindung aus dieser Muffe und den betreffenden Enden der Kabelschutzrohre.

Eine bevorzugte Ausführung der Muffe nach Anspruch 4 ist Gegenstand des Anspruches 5. Hiermit ist eine einwandfreie Positionierung der Enden, d.h. Stirnflächen der beiden Kabelschutzrohre gegeben.

Gemäß der Lehre des Anspruches 6 sind die Längen der Muffenteile, welche die Kabelschutzrohrenden aufnehmen, so gewählt, daß die erforderliche lange Gleitstrecke auch muffenseitig gegeben ist.

Die Lehre der Erfindung nach einem oder mehreren der Ansprüche 4 bis 6, die vorstehend im einzelnen erläutert wurde, kann auch vom Prinzip her zur Einführung eines Leitungsabschnittes in ein Gebäude, einen Ziehkasten oder dergleichen verwendet werden, wobei die Muffe bzw. ein entsprechender Muffenteil gebäudeseitig vorgesehen ist.

Die weitere Alternative zur Lösung der eingangs genannten Aufgabe besteht gemäß Anspruch 15 aus einer Kabelschutzanordnung für oder an eine im Erdboden zu verlegende und an Gebäude, Ziehkästen oder dergleichen anschließbare Leitungsanordnung, die aus mehreren miteinander, sowie mit den Gebäuden, Ziehkästen oder dergleichen mechanisch und elektrisch verbindbaren Leitungsabschnitten besteht, wobei der einzelne Leitungsabschnitt aus zumindest einem Kabelschutzrohr aus einem isolierenden Werkstoff, bevorzugt Kunststoff, und einem oder mehreren Leiter(n) oder Kabel(n) besteht, der bzw. die in das Kabelschutzrohr eingebracht oder eingezogen ist bzw. sind, wobei das Kabelschutzrohr außenseitig von einer elektrisch leitfähigen und blitzstromtragfähigen Abschirmung und von einer leitfähigen Schutzschicht umgeben ist. Diese Kabelschutzanordnung ist zunächst dadurch gekennzeichnet, daß die Kabelschutzrohre jeweils aus zwei schalenförmigen Hälften zusammengesetzt oder zusammensetzbar sind, die zusammengesetzt im Querschnitt etwa eine Kreisform bilden, daß lösbare Mittel zum Halt der beiden Hälften aneinander vorgesehen sind, daß sich an den Enden der beiden Hälften Kontaktflächen zur elektrischen Verbindung zum angrenzenden Kabelschutzrohr, Leitungsabschnitt, Gebäude, Ziehkasten oder dergleichen befinden, wobei entsprechende Mittel für diesen elektrischen Anschluß vorgesehen sind, und daß die elektrische Abschirmung jeder Hälfte des hiervon gebildeten Kabelschutzrohres eine metallene, leitende und nach Querschnitt und spezifischer Leitfähigkeit blitzstromtragfähige Folie ist, die von einem eine Schutzschicht bildenden Außenmantel aus einem elektrisch leitenden Kunststoff umgeben ist, oder daß eine zugleich die Abschirmung und die Schutzschicht jeder der schalenförmigen Hälften eines Kabelschutzrohres bildende Schutzschicht aus einem hochleitfähigen Kunststoff vorgesehen ist, die in ihren Abmessungen und in ihrer spezifischen elektrischen Leitfähigkeit blitzstromtragfähig ausgebildet ist. Hiermit wird die eingangs genannte Aufgabenstellung zunächst zusätzlich für den Fall gelöst, daß man hiermit auch bereits im Erboden verlegte Kabel oder Leitungen nachrüsten, d.h. nachträglich mit einer Abschirmung nach der Lehre der Erfindung versehen kann. Dazu bedarf es nur einer Aufgrabung des um die verlegte Leitung befindlichen Erdreiches so weit, daß zunächst eine der schalenförmigen Hälften unter die Leitungen oder Kabel eingeführt, dann die obere, schalenförmige Hälfte aufgelegt und hierauf mit der unteren Hälfte durch die lösbaren Mittel zu einem Kabelschutzrohr verbunden wird. Dieses Kabelschutzrohr ist mechanisch ebenso stabil, wie ein ungeteiltes Kabelschutzrohr. Elektrisch besteht in Längsrichtung genau die gleiche durchgehende blitzstromtragfähige Abschirmung. In Umfangsrichtung des aus den beiden Hälften gebildeten Kabelschutzrohres können die Abschirmungen oder Schutzschichten der Hälften entweder an ihren Stoßstellen durch zusätzliche elektrische Verbindungen miteinander in leitendem Kontakt sein. Man kann aber auf solche zusätzlichen elektrischen Verbindungen verzichten, da auch dann die an den Stoßstellen der Hälften entstehenden, relativ dünnen Isolierschichten keinen spürbaren Einfluß auf die Abschirmwirkung haben. Selbstverständlich ist diese Kabelschutzanordnung nach Anspruch der Erfindung nicht nur zur Nachrüstung schon verlegter Leitungen oder Kabel, sondern auch dann einsetzbar, wenn Leitungsanordnungen bestehend aus Leitungen oder Kabeln und Kabelschutzrohren aus diesen beiden schalenförmigen Hälften zusammen neu verlegt werden. Die eingangs bereits erläuterte DE-A-27 10 620 zeigt zwar einen Faraday'schen Käfig, der zweiteilig ausgebildet ist, so daß er vom Prinzip her auch zur Nachrüstung von im Erdboden verlegten Leitungen einsetzbar ist. Dabei bestehen aber zunächst die bereits eingangs erläuterten Nachteile. Außerdem ist dieser Käfig im Querschnitt ziemlich groß, so daß im Fall der Nachrüstung von schon verlegten Leitungen oder Kabeln wesentlich mehr an Erdreich ausgehoben werden muß. Außerdem besteht der weitere Nachteil, daß nach dem "Herumfädeln" des "U"-Teiles dieses Käfigs um die im Erdboden befindlichen Leitungen oder Kabel zunächst der Innenraum des vorgenannten "U" mit Erdreich gefüllt und dieses verdichtet werden muß, bevor man den Deckel auflegen kann. Andernfalls würde das zum Schluß der Arbeiten wieder aufzubringende Erdreich nur teilweise durch die Maschen des Käfigs in dessen Innenraum hineinfallen, so daß dann das Gewicht des aufgeschütteten Erdreiches den Käfig zusammendrücken und damit so weit beschädigen würde, daß seine Abschirmwirkung nicht mehr gegeben ist.

Die vorstehend erläuterten drei prinzipiellen Ausführungen der Erfindung gemäß Anspruch 1, Anspruch 2 und Anspruch 15 sind einander nebengeordnete, je für sich schutzfähige Kabelschutzanordnungen nach der Erfindung.

Weitere Vorteile und Merkmale der Erfindung sind den weiteren Unteransprüchen sowie der nachfolgenden Beschreibung und der zugehörigen Zeichnung von erfindungsgemäßen Ausführungsmöglichkeiten zu entnehmen. In der Zeichnung zeigt:
- Fig. 1:: schematisch das Beispiel einer Leitungsanordnung nach der Erfindung, in Verbindung mit Gebäuden und einem Ziehkasten in einem gegenüber den übrigen Figuren kleineren Maßstab,
- Fig. 2:: in einem teilweisen Querschnitt eine Muffenverbindung von aneinander angrenzenden Leitungsabschnitten,
- Fig. 3:: eine Draufsicht auf die Muffe nach Fig. 2, unter Weglassung der Anschlußschellen und der Dichtungen,
- Fig. 4:: das Ausführungsbeispiel einer Einführung eines Leitungsabschnittes nach der Erfindung in ein Gebäude, einen Ziehkasten oder dergleichen,
- Fig. 5:: eine zweite Kabelschutzanordnung der Erfindung in einer Schnittdarstellung analog zu der Darstellung in Fig. 2,
- Fig. 5a:: die zweite Kabelschutzanordnung der Erfindung in einer Schnittdarstellung analog zu der Darstellung in Fig. 4,
- Fig. 6:: eine dritte Kabelschutzanordnung nach der Erfindung in perspektivischer Ansicht,
- Fig. 7:: eine Ausführungsmöglichkeit der erfindungsgemäßen Kabelschutzanordnung nach Fig. 6 in einem Querschnitt gemäß der Linie VII-VII in Fig. 6,
- Fig. 8:: einen Schnitt einer weiteren Ausführungsmöglichkeit der Kabelschutzanordnung nach Fig. 6 analog der Schnittführung VII-VII in Fig. 6,
- Fig. 9:: in einer teilweisen Schnittdarstellung analog der Schnittlinie IX-IX in Fig. 6 eine weitere Ausführungsmöglichkeit der dritten Kabelschutzanordnung der Erfindung, welche für die Erstausstattung bei Neuanlagen gedacht ist,
- Fig. 10:: einen Schnitt gemäß der Linie X-X in Fig. 9.

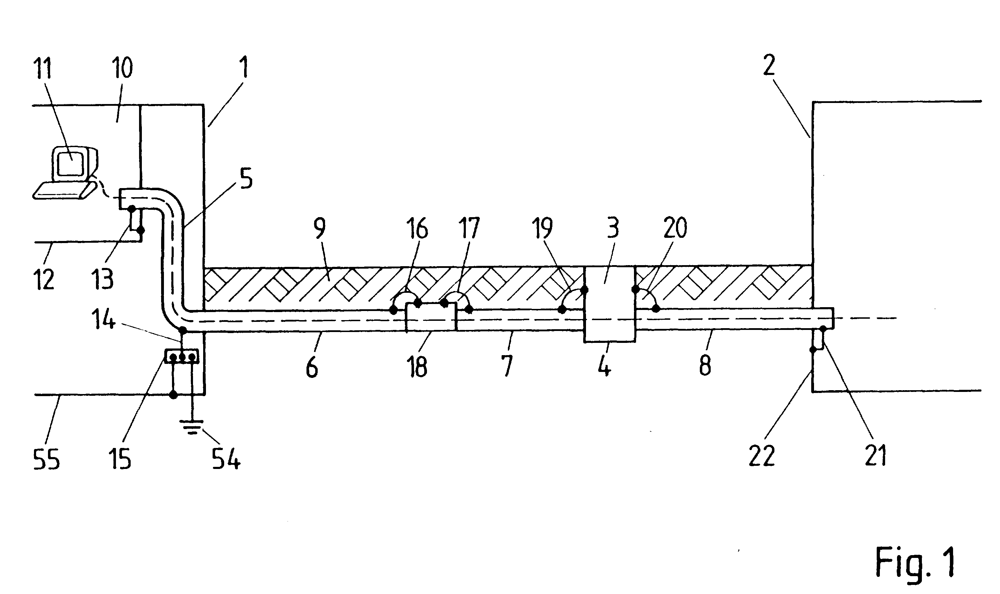

Fig. 1 zeigt das Ausführungsbeispiel einer Leitungsanordnung, bestehend aus einem ersten Gebäude 1, einem zweiten Gebäude 2, einem Ziehkasten 3 mit einer metallenen Abschirmung 4, Leitungsabschnitten 5, 6, 7 und 8 sowie dem Erdreich 9. Im Gebäude 1 kann ein besonders gegen elektrische ÜberSpannungen, Störfelder u.s.w. zu schützender Raum 10, z.B. eine Raum zur Aufnahme eines Computers 11, vorgesehen sein, der eine metallene Abschirmung 12 aufweist. Ferner sind in Fig. 1 lediglich prinzipiell die elektrischen Anschlüsse der Abschirmungen der Leitungsabschnitte 5 bis 8 dargestellt, und zwar in Form eines Anschlusses 13 an die Abschirmung 12, eines Anschlusses 14 an eine Potentialausgleichsschiene 15, der Verbindungen 16, 17 der Leitungsabschnitte 6, 7 mit einer Muffe 18, die elektrischen Verbindungen 19, 20 der Abschirmungen der Leitungsabschnitte 7, 8 mit der Abschirmung 4 des Ziehkastens 3, und schließlich ein elektrischer Anschluß bzw. Verbindung 21 der Abschirmung des Leitungsabschnittes 8 mit der Abschirmung oder einer Armierung 22 des Gebäudes 2.

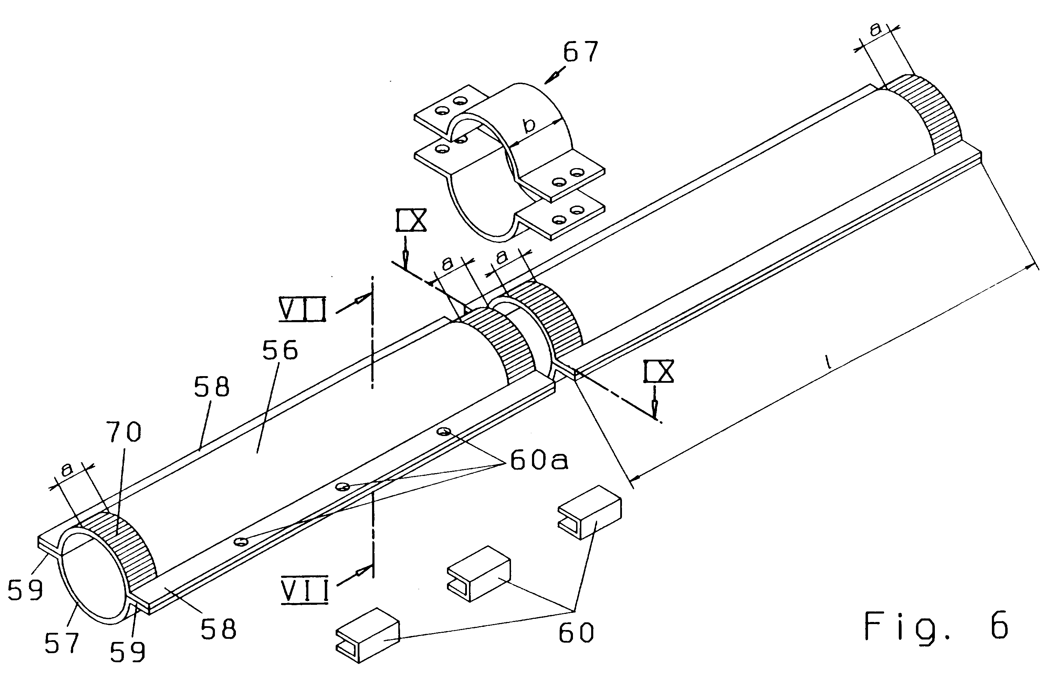

Generell gilt für sämtliche Ausführungen der Erfindung, daß die Kabelschutzanordnung eines Leitungsabschnittes entweder von einem Kabelschutzrohr oder von mehreren, gemäß der Erfindung an ihren Enden miteinander verbundenen Kabelschutzrohren gebildet ist. Ob man für einen Leitungsabschnitt nur ein Kabelschutzrohr oder mehrere Kabelschutzrohre vorsieht, hängt von der Länge des betreffenden Leitungsabschnittes und davon ab, welche Länge man den Kabelschutzrohren aus Fertigungsgründen und auch aus Transportgründen geben wird. Es liegt im Bereich der Erfindung, Kabelschutzrohre unterschiedlicher Länge vorzusehen. Ferner gilt für alle Ausführungen der Erfindung, daß entweder die Leitungsabschnitte aus Kabelschutzrohren und darin befindlichen Kabeln oder Leitungen zusammen in der Fabrik hergestellt und dann zum Verlegungsort transportiert werden. In diesem Fall sind also die Kabel oder Leitungen bereits ab Fabrik in das Kabelschutzrohr eingebracht. Oder man zieht die Leitungen erst auf der Baustelle in Kabelschutzrohre ein, die für sich in der Fabrik hergestellt wurden, d.h. daß die Zusammenführung von Kabelschutzrohren und Leitungen oder Kabeln erst an der Baustelle stattfindet. Die vorstehenden Ausführungen gelten sowohl für die einstückigen Kabelschutzrohre gemäß den Ausführungsbeispielen der Fig. 1 bis 5, als auch für zweigeteilte Kabelschutzrohre gemäß den Ausführungsmöglichkeiten der Fig. 6 bis 10. Auf die Ausführungen zur Nachrüstung oder Erstausstattung mit solchen geteilten Kabelschutzrohren wird in dem Zusammenhang verwiesen.

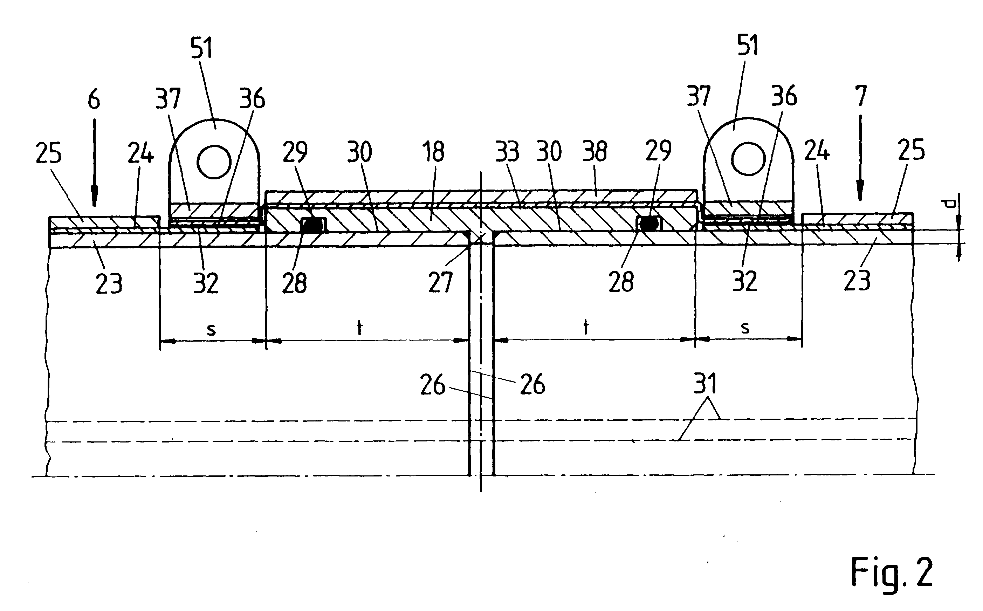

Fig. 2 zeigt im Zusammenhang mit der ersten Kabelschutzanordnung nach der Erfindung eine bevorzugte Ausführungsform der Verbindung zwischen zwei Leitungsabschnitten 6 und 7 mit Hilfe einer Muffe 18. Das jeweilige Kabelschutzrohr 23 besteht aus einem isolierenden Werkstoff, z.B. aus einem Kunststoff wie PVC, PE, PP, PPO, PA, PC, ABS. Die jeweilige metallene Folie 24 ist (siehe oben) bevorzugt aus Kupfer. Die Abschirmung wird von einem Außenmantel 25 umgeben, der aus einem leitfähigen Kunststoff besteht. Dies kann beispielsweise PE-leitfähig, PP-leitfähig oder ABS-leitfähig oder ein in seiner elektrischen Leitfähigkeit entsprechendes Polyacetylen sein. Hierzu sind beispielsweise elektrisch leitfähig eingestellte teilkristalline Polyfinylensulfidformmassen bekannt, die mit Glasfasern versetzt sein können. Auch sind hierzu Kunststoffe mit entsprechend hohem Rußanteil bekannt. Bei Vorstehendem will man bevorzugt eine Leitfähigkeit des Außenmantels erzielen, die etwa mit der Leitfähigkeit des umgebenden Erdbodens übereinstimmt. Dieser Außenmantel erreicht zweierlei. Zum einen die elektrische Verbindung der Abschirmung mit dem umgebenden Erdreich und ferner dabei einen Schutz der Abschirmung gegen Verletzungen durch im Erdreich befindliche Gegenstände wie scharfkantige Steine, Metallteile und dergleichen, wobei im übrigen der Außenmantel 25 eine Korrosion der Abschirmung verhindert.

Die in sich einstückigen Kabelschutzrohre 23 haben jeweils den gleichen Durchmesser und liegen sich mit ihren Stirnflächen 26 in einem geringen Abstand gegenüber, wobei in der bevorzugten Ausführungsform der Erfindung die Stirnflächen 26 an einem Bund 27 anliegen, der an der Innenseite der aus isolierendem Kunststoff bestehenden Muffe 18 umläuft. Ferner ist die Muffe 18 innenseitig mit umlaufenden Nuten 28 versehen, die jeweils als Feuchtigkeitssperre eine Dichtung 29 aufnehmen. Hierdurch wird das Eindringen von Feuchtigkeit in die Gleitstrecke 30 verhindert, die sich zwischen der Innenfläche der Muffe und der im vorliegenden Ausführungsbeispiel daran anliegenden Außenfläche des Kabelschutzrohres befindet. Gegebenenfalls könnte zwischen Innenfläche der Muffe und Außenfläche des jeweiligen Kabelschutzrohres sich eine ebenfalls als Feuchtigkeitssperre wirkende Dichtungseinlage befinden, so daß in diesem Fall die Außenfläche des Kabelschutzrohres einen entsprechenden Abstand von der Innenfläche der Muffe hat (in der Zeichnung nicht dargestellt). Auch hierbei wird die vorgenannte Gleitstrecke 30 gebildet. Diese Gleitstrecke 30 hat eine Länge t, die mindestens zehnmal so groß sein soll, als die Dicke d der Wandung der Kabelschutzrohre 23. In einer praktischen Ausführungsform beträgt die Dicke d des Kabelschutzrohres ca. 3 mm und die Strecke t 30 mm. Die Erfindung soll aber nicht auf diese Maße beschränkt sein. Hiermit ist diese Gleitstrecke t lang genug, um etwaige Überschläge von der jeweiligen Kontaktfläche 32 der Abschirmung des Kabelschutzrohres zu in dessen Inneren verlegten, schematisch mit 31 angedeuteten Leitern oder Kabeln zu verhindern. Im übrigen wird hierzu auch auf die Darlegungen der elektrischen Bedingungen derartiger Überschläge in DE-A-38 12 057 verwiesen.

Von Vorteil ist, daß diese Strecke t einfach dadurch geschaffen werden kann, daß am Kabelschutzrohr 23 von dessen jeweiligen Stirnflächen 26 her über die Länge t sowohl der Mantel 25, als auch die Abschirmung 24 entfernt werden, wobei außerdem der Mantel 25 noch um einen weiteren Bereich s abgenommen wird, der etwa der Breite der hiermit freigelegten Kontaktfläche 32 entspricht. Somit ragt die Abschirmung 24 dieses Leitungsabschnittes frei um den Bereich s in Richtung zum Ende des Kabelschutzrohres vor und bildet somit die zylindrisch umlaufende Kontaktfläche 32.

Die Muffe 18 ist außenseitig mit einer Abschirmung 33 versehen, welche in ihrer Ausgestaltung und Abschirmwirkung der Abschirmung 24 entspricht. Erwähnt sei, daß sowohl die Abschirmungen 24 als auch die Abschirmung 33 im Querschnitt kreisförmig sind, d.h. die Form eines Zylinders haben, welcher das Kabelschutzrohr 23 bzw. die Muffe 18 daran anliegend umgibt und sich in deren Längsrichtung erstreckt.

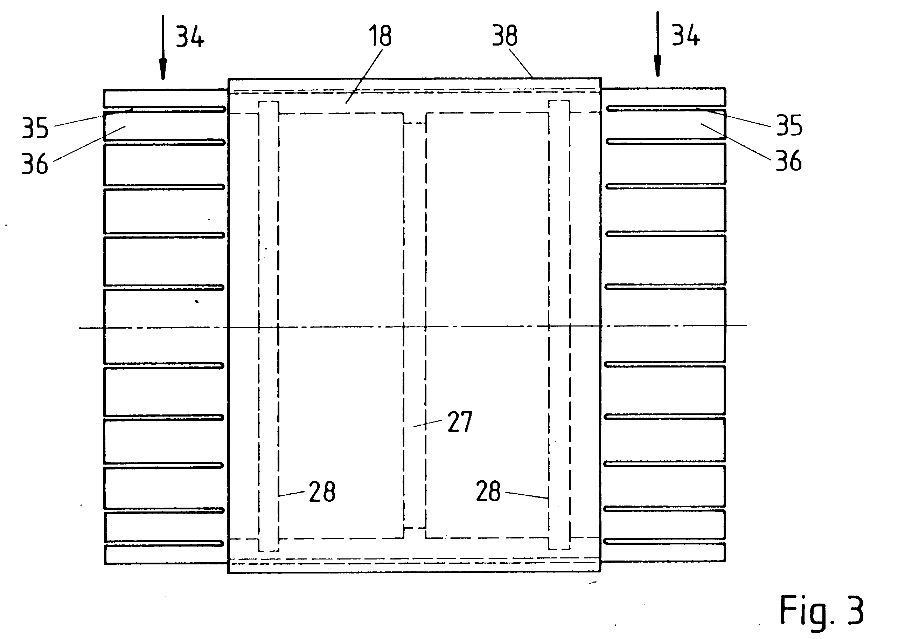

Gemäß dem vorliegenden Ausführungsbeispiel, auf welches die Erfindung aber nicht beschränkt ist, ist die Abschirmung 33 an den Stirnenden der Muffe 18 herausgeführt und in diesem herausgeführten Bereich 34 mit Schlitzen 35 versehen (siehe insbesondere Fig. 3), zwischen denen sich Fahnen oder Abschnitte 36 aus dem Folienmaterial der Abschirmung 33 befinden. Diese Schlitze ermöglichen es in besonders einfacher Weise, die aus der Muffe herausragenden Abschnitte 36 der Abschirmung 33 soweit in Richtung zum Innern der Kabelschutzrohre hin zu verlagern, daß sie mit den Kontakflächen 32 der Abschirmungen 24 in Berührung kommen, um dann mit Hilfe einer Rohrschelle 37 aus leitfähigem Material, bevorzugt Kupfer, mit den Kontaktflächen 32 verklemmt zu werden. Anstelle einer solchen Schelle kann auch ein Zugband oder dergleichen vorgesehen sein. Somit ist eine blitzstromtragfähige, leitende Verbindung von der Abschirmung 24 des Kabelschutzrohres des Leitungsabschnittes 6 über die Abschirmung 33 der Muffe zur Abschirmung 24 des Kabelschutzrohres des Leitungsabschnittes 7 geschaffen, die darüber hinaus auch mechanisch hinreichend fest ist. An die jeweilige Schelle 37 bzw. ein Ohr 51 dieser Schelle oder ein analoges Klemmittel können Anschlußleitungen, z.B. zum Anschluß von benachbarten Erdungsleitungen oder an eine Potentialausgleichsschiene oder dergleichen, angebracht werden. Die Muffe 18 hält die sich gegenüberliegenden Endbereiche der Kabelschutzrohre 23 mechanisch fest und verwindungssteif zusammen.

Ferner ist die Abschirmung 33 der Muffe außenseitig mit einem Außenmantel 38 umgeben, der vom Werkstoff und Funktion her gleich den Außenmänteln 25 der Kabelschutzrohre 23 ist. Insgesamt ist eine mechanisch feste und zugleich eine durchgehende, Abschirmung besitzende Verbindung von Kabelschutzrohren oder Leitungsabschnitten 6, 7 geschaffen.

Es wäre auch möglich, im Verlauf eines Leitungsabschnittes den Außenmantel 25 über ein Teilstück seiner Länge, und zwar bevorzugt umlaufend abzunehmen, so daß dort ebenfalls die Abschirmung frei liegt, um daran eine Schelle oder sonstiges Kontaktmittel anzubringen. Damit kann man im Verlauf eines Leitungsabschnittes an gewünschten Stellen zu erdende Bauelemente, Teile oder dergleichen an die Abschirmung elektrisch anschließen.

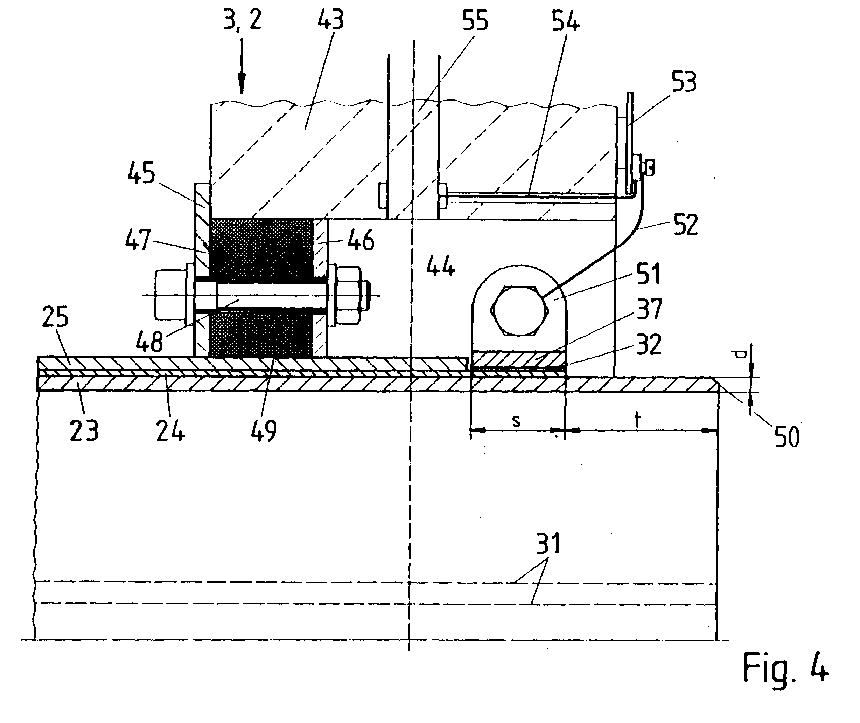

Fig. 4 zeigt die Einführung eines Leitungsabschnittes in ein Gebäude oder dergleichen, z.B. in Fig. 1 des rechten Endes des Leitungsabschnittes 7 in den Ziehkasten 3 oder des rechten Endes des Leitungsabschnittes 8 in das Gebäude 2. Für das Kabelschutzrohr und weitere Elemente sind die Bezifferungen aus Fig. 2 gewählt. Im Beton oder Mauerwerk 43 des Gebäudes oder dergleichen befindet sich eine Öffnung 44, in welche der Leitungsabschnitt eingeführt werden soll. Die Abdichtung der Öffnung 44 nach außen geschieht durch eine Gebäudeeinführung, bestehend aus zwei Platten 45, 46 und einer dazwischen befindlichen, z.B. aus Gummi bestehenden Dichtung 47. Die vorgenannten Teile 45, 46 und 47 sind durch Spannschrauben 48 zusammengehalten und innenseitig mit einer zylindrischen Öffnung 49 versehen, in welche mit Dichtsitz der Außenmantel 25 des betreffenden Leitungsabschnittes eingesetzt ist. Von der im Gebäudeinnern liegenden Stirnfläche 50 dieses Leitungsabschnittes her in Richtung zur Gebäudeeinführung ist der Außenmantel 25 um die Länge t+s weggenommen, während die Abschirmung 24 nur um die Länge t entfernt wurde, wobei ebenfalls etwa t gleich 10d oder größer als 10d ist. Somit werden auch hier Gleitentladungen vermieden.

Sollte an das in Fig. 4 rechts dargestellte Ende des Leitungsabschnittes noch ein weiterer Leitungsabschnitt angeschlossen werden, so kann dies mit einer Muffenverbindung der Erfindung geschehen, wie sie beispielsweise in den Fig. 2, 3 dargestellt und vorstehend erläutert ist. Es liegt auch im Bereich der Erfindung, die in Fig. 4 dargestellte Einführung in ein Gebäude oder dergleichen mit einer Muffenanordnung gemäß Fig. 2, 3 auszugestalten, wobei nur die im Gebäude befindliche Schelle mit einem Ohr gemäß Ziffer 51 versehen werden muß. Dabei kann die Muffe im Prinzip die Hälfte der Verbindungsmuffe aus den Beispielen der Fig. 2, 3 sein.

Statt dessen kann auch aus dem Gebäude, Ziehkasten oder dergleichen ein Teil eines Leitungsabschnittes herausragen und mit dem angrenzenden Leitungsabschnitt über eine Muffe nach der Erfindung (siehe z.B. Fig. 2, 3) verbunden werden.

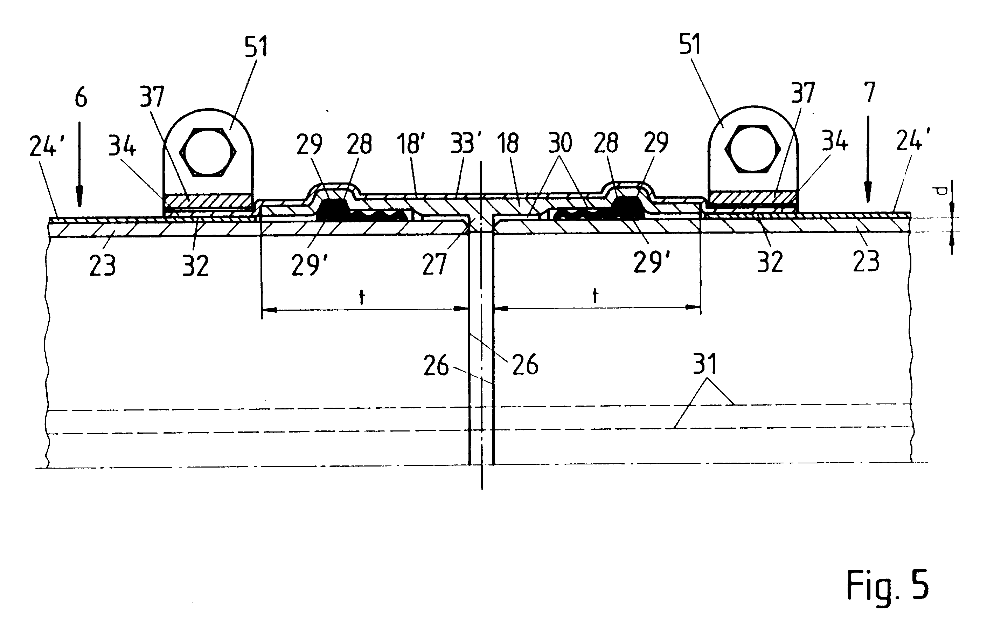

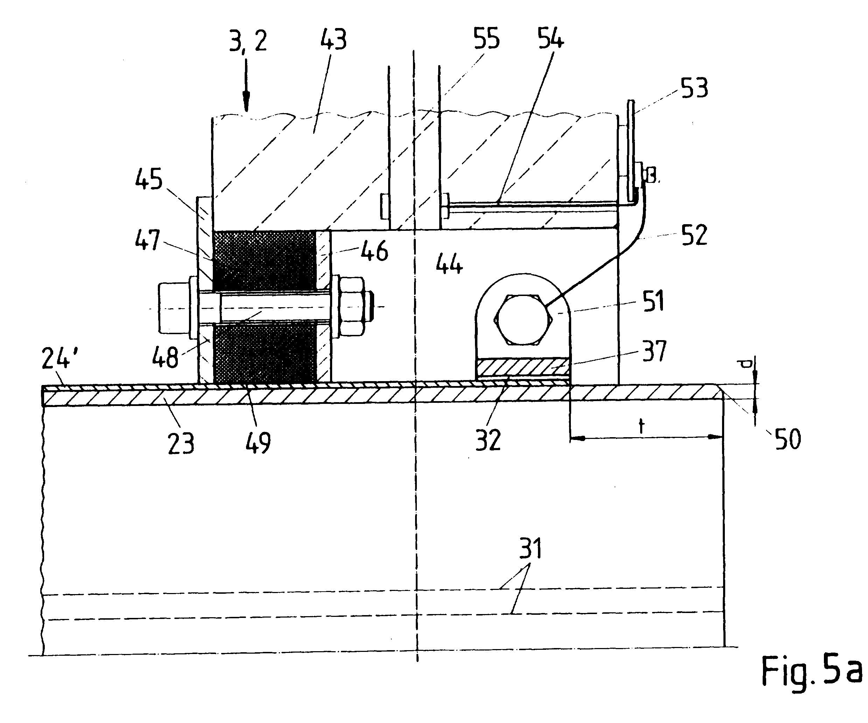

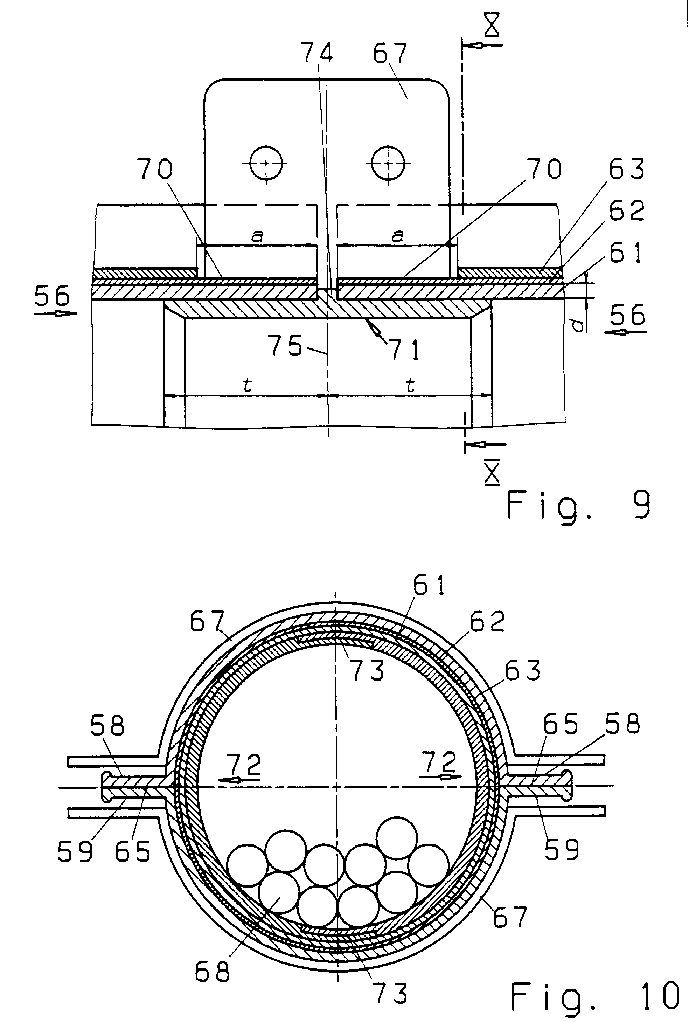

Fig. 5 zeigt in einem Querschnitt eine weitere Kabelschutzanodnung der Erfindung, wobei dieser Querschnitt vom Prinzip her dem der Fig. 2 entspricht. Der wesentliche Unterschied gegenüber der in den Fig. 1 bis 4 dargestellten Kabelschutzanordnung besteht darin, daß bei der Ausführung nach Fig. 5 Abschirmung und Schutzschicht jedes Kabelschutzrohres aus einer einzigen Schutzschicht 24' aus einem hochleitfähigen Kunststoff besteht. Diese hochleitfähige Schutzschicht 24' ist also eine Schicht, welche die Eigenschaften einer blitzstromtragfähigen Abschirmung und einer äußeren, leitfähigen Schutzschicht (Außenmantel) in sich vereinigt. Dies gilt gleichermaßen für die hochleitfähige Schutzschicht 33' der Muffe 18 in der Ausführung gemäß Fig. 5 und ferner für die hochleitfähige Schutzschicht 64 gemäß Fig. 8.

Im einzelnen gilt folgendes: Fig. 5 zeigt ebenfalls zwei hintereinander angrenzende Leitungsabschnitte 6, 7, wobei die zugehörigen Kabelschutzrohre 23 mit Hilfe einer Muffe 18 verbunden sind. Das jeweilige Kabelschutzrohr 23 besteht aus einem isolierenden Werkstoff, z.B. aus einem Kunststoff wie PVC, PE, PP, PPO, PA, PC, ABS. Die jeweilige Abschirmung wird in Art eines Außenmantels von der o.g. Schutzschicht 24' aus einem hochleitfähigen Kunststoff gebildet. Sie ist in ihrem Querschnitt so bemessen, daß sie blitzstromtragfähig ist. Dies können hochleitfähige Kunststoffe sein, wie sie weiter oben in der allgemeinen Beschreibung angegeben sind. Auch kann beispielsweise ein Kunststoff durch Oxydation mit einem sogenannten Dotierungsmittel auf einen sehr hohen Wert der Leitfähigkeit gesteigert werden. So ist mit einem entsprechenden Polyacetylen das Eineinhalbfache der Leitfähigkeit von Kupfer erreichbar. Diese Schutzschicht bewirkt sowohl die blitzstromtragfähige Abschirmung, als auch die elektrische Kontaktgabe dieser Abschirmung mit dem umgebenden Erdreich, sowie ferner einen Schutz gegen Verletzungen durch im Erdreich befindliche Gegenstände wie scharfkantige Steine, Metallteile und dergleichen und schließlich einen Korrosionsschutz gegen die Erdfeuchtigkeit.

Die Kabelschutzrohre 23 haben jeweils den gleichen Durchmesser und liegen sich mit ihren Stirnflächen 26 in einem geringen Abstand gegenüber, wobei in der bevorzugten Ausführungsform der Erfindung die Stirnflächen 26 an einem Bund 27 anliegen, der an der Innenseite der aus isolierendem Kunststoff bestehenden Muffe umläuft. Ferner ist die Muffe 18 innenseitig mit umlaufenden Nuten 28 versehen, die jeweils als Feuchtigkeitssperre eine Dichtung 29 aufnehmen. Sie kann entweder als sogenannter O-Ring oder aber gemäß Zeichnung als Dichtungseinlage mit einer Anlagefläche 29' ausgebildet sein. Im erstgenannten Fall werden die Enden der Kabelschutzrohre etwa bündig in die Innenräume der Muffe 18 eingeschoben werden, im letztgenannten Fall dagegen mit einem kleinen, durch die Abmessungen der Dichtung 28, 29 bedingten Abstand. In beiden Fällen wird die jeweilige Dichtung zusammengedrückt. Hierdurch wird das Eindringen von Feuchtigkeit in die Gleitstrecke 30 verhindert, die sich zwischen der Innenfläche der Muffe und der daran anliegenden Außenfläche des Kabelschutzrohres befindet. Diese Gleitstrecke 30 hat eine Länge t, die mindestens zehnmal so groß sein soll, als die Dicke d der Wandung der Kabelschutzrohre 23.

In einer praktischen Ausführungsform beträgt die Dicke d des Kabelschutzrohres ca. 3 mm und die Strecke t 30 mm. Die Erfindung soll aber nicht auf diese Maße beschränkt sein. Hiermit ist diese Gleitstrecke t lang genug, um etwaige Überschläge von der jeweiligen Kontaktfläche 32 der Schutzschicht 24' des Kabelschutzrohres zu in dessen Inneren verlegten, schematisch mit 31 angedeuteten Leitern oder Kabeln zu verhindern. Im übrigen wird auch hierzu auf die Darlegungen der elektrischen Bedingungen derartiger Überschläge in DE-A-38 12 057 verwiesen.

Von Vorteil ist, daß diese Strecke t einfach dadurch geschaffen wird, daß vom Kabelschutzrohr 23 von dessen jeweiligen Stirnflächen 26 her über die Länge t die Schutzschicht 24' entfernt (abgemantelt) wird.

Die Muffe 18 ist außenseitig mit einer Schutzschicht 33' versehen. Erwähnt sei, daß sowohl die Schutzschichten 24' als auch die Schutzschicht 33' im Querschnitt kreisförmig sind, d.h. die Form eines Zylinders haben, welcher das jeweilige Kabelschutzrohr 23 bzw. die Muffe 18 daran anliegend umgibt und sich in deren Längsrichtung erstreckt.

Die Schutzschicht 33' der Muffe ist an den Stirnenden der Muffe 18 herausgeführt und in diesem herausgeführten Bereich 34 mit Schlitzen 35 versehen (siehe insbesondere Fig. 3), zwischen denen sich Abschnitte 36 aus dem Material der Schutzschicht 33' befinden. Diese Schlitzung ermöglicht es in besonders einfacher Weise, die aus der Muffe herausragenden Abschnitte 36 der Schutzschicht 33' so weit in Richtung zum Innern der Kabelschutzrohre hin zu verlagern, daß sie mit den Kontaktflächen 32 der Schutzschichten 24' der Kabelschutzrohre in Berührung kommen, um dann mit Hilfe einer Rohrschelle 37 aus leitfähigem Material, bevorzugt Kupfer, mit den Kontaktflächen 32 verklemmt zu werden. Anstelle einer solchen Schelle kann auch ein Zugband oder dergleichen vorgesehen sein. Somit ist eine blitzstromtragfähige, leitende Verbindung von der Schutzschicht 24' des Kabelschutzrohres des Leitungsabschnittes 6 über die Schutzschicht 33' der Muffe 18 zur Schutzschicht 24' des Kabelschutzrohres des Leitungsabschnittes 7 geschaffen, die darüber hinaus auch mechanisch hinreichend fest ist. An die jeweilige Schelle 37 bzw. ein Ohr 51 dieser Schelle oder ein analoges Klemmittel können Anschlußleitungen, z.B. zum Anschluß an eine Potentialausgleichsschiene oder dergleichen, angebracht werden. Die Muffe 18 hält die sich gegenüberliegenden Endbereiche der Kabelschutzrohre 23 mechanisch fest und verwindungssteif. Insgesamt ist eine mechanisch feste und zugleich eine durchgehende, Abschirmung besitzende Verbindung der Leitungsabschnitte 6, 7 oder miteinander zu verbindende Kabelschutzrohre geschaffen. In Abweichung von der Darstellung in Fig. 2 kann die Muffe 18 an ihrer Außenseite 18' durchgehend den gleichen Durchmesser haben, sofern die Dichtungen 28 in der dann verbleibenden Wandstärke der Muffe unterbringbar sind (in der Zeichnung nicht dargestellt).

Fig. 5a entspricht im wesentlichen der Fig. 4, so daß auf die dortigen Ausführungen verwiesen wird. Auch sind die Bezifferungen aus Fig. 4 in Fig. 5a übernommen. Nur besteht hier der Unterschied, daß in Fig. 5a ein Kabelschutzrohr mit einer hochleitfähigen Schutzschicht 24' vorgesehen und dargestellt ist, welche anhand der Fig. 5 im einzelnen erläutert wurde. Von der im Gebäudeinnern liegenden Stirnfläche 50 dieses Leitungsabschnittes her in Richtung zur Gebäudeeinführung ist die Schutzschicht 24' um die Länge t weggenommen, wobei ebenfalls etwa t gleich 10d oder größer als 10d ist. Somit werden auch hier Gleitentladungen vermieden.

Bei der Montage wird zweckmäßigerweise so vorgegangen, daß nach dem Einbringen dieses Endes des Leitungsabschnittes zunächst die Verbindung 52 hergestellt und dann die Gebäudeeinführung 45-48 in die gezeichnete Position gebracht und fixiert wird. Sollte an das in Fig. 4 rechts dargestellte Ende des Leitungsabschnittes noch ein weiterer Leitungsabschnitt angeschlossen werden, so kann dies mit einer Muffenverbindung der Erfindung geschehen, wie sie beispielsweise in den Fig. 2, 3 dargestellt und vorstehend erläutert ist. Es liegt auch im Bereich der Erfindung, die in Fig. 4 dargestellte Einführung in ein Gebäude oder dergleichen mit einer Muffenanordnung gemäß Fig. 2, 3 durchzuführen, wobei nur die im Gebäude befindliche Schelle mit einem Ohr gemäß Ziffer 51 versehen werden muß. Dabei kann die Muffe im Prinzip die Hälfte der Verbindungsmuffe aus den Beispielen der Fig. 2, 3 sein. Statt dessen kann auch aus dem Gebäude, Ziehkasten oder dergleichen ein Teil eines Leitungsabschnittes herausragen und mit dem angrenzenden Leitungsabschnitt über eine Muffe nach der Erfindung (siehe z.B. Fig. 2, 3) verbunden werden.

Im übrigen gilt die Erläuterung der Schnittdarstellung gemäß Fig. 4 und die dort vorgesehene Bezifferung der einzelnen Bauteile ebenso für Fig. 5a.

Fig. 6 zeigt eine Kabelschutzanordnung, deren Kabelschutzrohre jeweils aus zwei schalenförmigen Hälften 56, 57 zusammengesetzt sind. Ferner ist in dieser perspektivischen Ansicht auch die mögliche Länge L eines Kabelschutzrohres (dies gilt auch für einteilige Kabelschutzrohre) von beispielsweise 3 bis 5 Meter eingezeichnet. Der Durchmesser eines solchen Kabelschutzrohres kann beispielsweise 140 mm betragen, ohne daß die Erfindung hierauf beschränkt ist. Jede der schalenförmigen Hälften 56, 57 ist an ihren Längsseiten mit einem Rand in Form einer Abwinkelung 58, 59 versehen. Die Formgebung ist gemäß dieser bevorzugten Ausführung so getroffen, daß beide Hälften 56, 57 im Querschnitt etwa einen Halbkreis bilden, d.h. zusammengesetzt etwa einen Vollkreis, und daß der Grad der Abwinkelung 58, 59 zu den halbkreisförmigen Bereichen dieser Hälften so groß ist, daß zusammengesetzt die beiderseitigen Abwinkelungspaare 58, 59 aneinander liegen. Durch aufsteckbare Klammern 60 werden an jeder Seite des so gebildeten Kabelschutzrohres das dort befindliche Paar von Abwinkelungen 58, 59 miteinander verklemmt. Zusätzlich können noch Bohrungen 60a vorgesehen sein, welche auf jeder Seite das betreffende Paar 58, 59 der Abwinkelungen durchsetzen, die von Justier- und Arretierstiften, insbesondere Kunststoffspreiznieten (nicht dargestellt) durchgeführt werden. Damit behalten die Hälften 56, 57 eines Kabelschutzrohres auch während des Verlegens und nachher die erfordeliche Position zueinander bei.

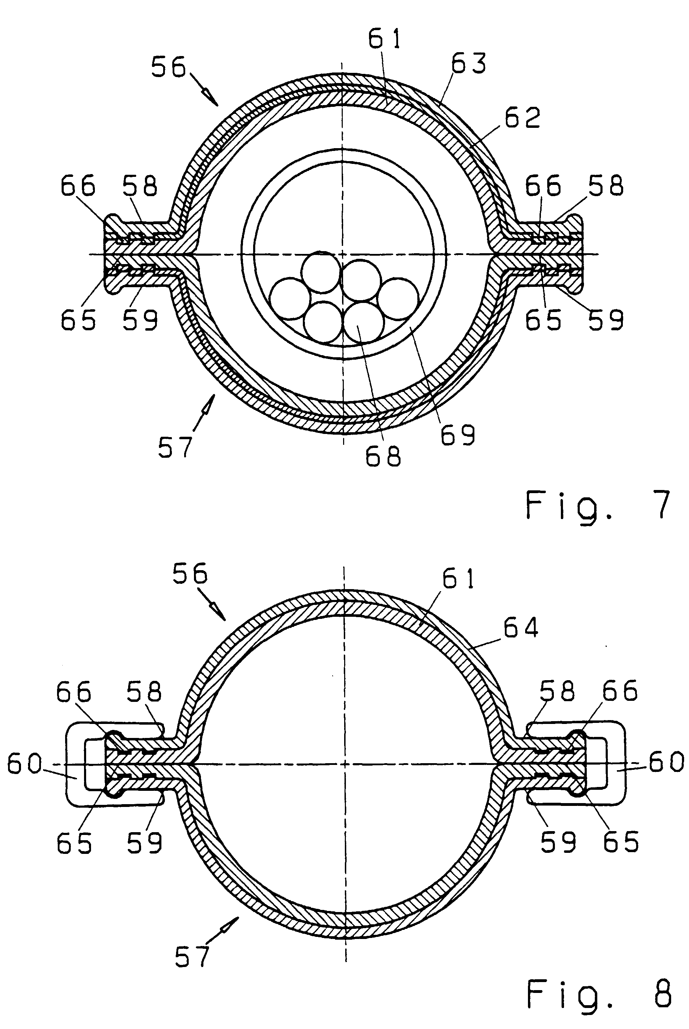

Die Fig. 7 und 8 zeigen die Querschnitte verschiedener Ausführungsformen der Anordnung gemäß Fig. 6, die jedoch in Fig. 6 aus Gründen der zeichnerischen Darstellung nicht eingezeichnet sind. Im Ausführungsbeispiel der Fig. 7 besteht jede der schalenförmigen Hälften 56, 57 aus einer tragenden Kunststoffschicht 61, einer sich daran nach außen hin anschließenden metallischen und blitzstromtragfähigen Abschirmung 62 aus einer Metallfolie, bevorzugt einer Kupferfolie, und einem die Folie 62 von außen abdeckenden Außenmantel 63 aus einem elektrisch leitenden Kunststoff. Dies entspricht - abgesehen von der Formgebung - den Teilen 23, 24 und 25 der zuerst erläuterten, im Querschnitt in Fig. 2 dargestellten Kabelschutzanordnung. Die metallische Abschirmung 62 kann, wie das Ausführungsbeispiel der Fig. 7 zeigt, auch an den Abwinkelungen 58, 59 vorgesehen sein. Sie wird dort zwischen den nachstehend erläuterten Aussparungen und Vorsprüngen 66 eingequetscht.

Dagegen zeigt Fig. 8 schalenförmige Hälften 56, 57, die im Querschnitt aus einer tragenden Kunststoffschicht 61 und einer die Kunststoffschichthälften 61 von außen umgebenden Schutzschicht 64 bestehen. Dies ist eine Schutzschicht aus einem hochleitfähigen Kunststoff, wobei Abmessungen und Leitfähigkeit so gewählt sind, daß diese Schicht blitzstromtragfähig ist. Zugleich dient sie zur Herstellung des notwendigen Erdkontaktes. Dies entspricht, abgesehen von der Formgebung, dem Aufbau der zweiten Kabelschutzanordnung nach der Erfindung mit der in ihrem Querschnitt in Fig. 5 dargestellten Ausführung mit einer tragenden Kunststoffschicht 23 und der hochleitfähigen Schutzschicht 24.

Bei der Querschnittsgestaltung der schalenförmigen Hälften gemäß Fig. 7, 8 ist in Umfangsrichtung betrachtet die Abschirmung an den Stoßflächen 65 der abgewinkelten Ränder 58, 59 für einen sehr kleinen Abstand unterbrochen. Dies hat aber auf den Abschirmeffekt keinen Einfluß.

Fig. 7, 8 zeigen ferner, daß die abgewinkelten Ränder an ihren einander zugewandten Flächen mit Aussparungen und Vorsprüngen versehen sind, die generell mit Ziffer 66 benannt sind. Hierdurch wird die Justierung der Hälften in der gewünschten Lage und die Fixierung dieser Position durch die aufgesteckten Klammern 60 erleichtert und mit gesichert. Die Klammern 60 können aus federndem Metall sein, so daß sie mit ihrer Federkraft die Abwinkelungen 58, 59 gegeneinander drücken.

In Längsrichtung der Leitungsabschnitte bzw. der sie bildenden Kabelschutzrohre ist jedoch keine Stromunterbrechung vorhanden. An den Enden der Hälften 56, 57 ist im Falle der Ausführung nach Fig. 6 über eine Strecke a die leitfähige Außenschicht 63 so weit abgemantelt, daß über eine genügende Breite (a) die metallische Abschirmung 62 frei liegt. Es sind metallische Schellen, bevorzugt aus Kupfer bestehende Schellen 67 vorgesehen, welche in ihrer Breite b der doppelten Breite a der Abmantelung a entsprechen. Sie werden um die Abmantelungen der aneinanderstoßenden Enden der Hälften 56, 57 gelegt und dann fest verklemmt. Damit ist sowohl eine elektrische Verbindung der Abschirmungen beider Rohre bzw. beider Schalenpaare 56, 57 erreicht, als auch deren feste mechanische Verbindung miteinander. Hierzu empfiehlt sich, die Breite b der Schellen 67 relativ groß zu wählen, um den gewünschten festen mechanischen Zusammenhalt zu gewährleisten.

Falls die Hälften 56, 57 gemäß Fig. 8 ausgeführt sind, entfallen Abmantelungen, da die hochleitfähige Schutzschicht 64 die Stromkontaktgabe bewirkt. In diesem Fall wird die Schelle 67 um die aneinanderstoßenden Enden der von je einem Schalenpaar 56, 57 gebildeten Kabelschutzrohre gelegt und ebenfalls verklemmt. Aufgrund der hohen elektrischen Leitfähigkeit der Schutzschicht 64 ist auch in diesem Falle ein durchgehender Stromfluß in der Längsrichtung von einem Hälftenpaar zum anderen Hälftenpaar u.s.w. gegeben. Erwähnt sei, daß aus Gründen der besseren zeichnerischen Darstellung in Fig. 6 das linke Hälftenpaar 56, 57 mit seiner rechts gelegenen Stirnkante einen kleinen Abstand von der gegenüberliegenden Stirnkante des rechts dargestellten Hälftenpaares 56, 57 hat. Im zusammengebauten Zustand liegen in dieser Ausführungsform der Erfindung aber die beiden vorgenannten Stirnkanten aneinander.

Das Ausführungsbeispiel der Fig. 6 (sei es in der Querschnittsgestaltung gemäß Fig. 7 oder in der Querschnittsgestaltung gemäß Fig. 8) ist gedacht für das sogenannte Nachrüsten von schon vorhandenen Leitungen oder Kabeln. Solche Leitungen oder Kabel 68 sind in ihrem Querschnitt in Fig. 7 angedeutet. Da sie bereits verlegt sind, sind sie schon bei dieser Verlegung mit einem sie zusammenhaltenden und gegen mechanische Einflüsse schützenden Kunststoffrohr 69 umgeben worden. In diesem Fall verhindert das Kunststoffrohr 69 einen Überschlag von der jeweiligen Kontaktfläche 70 der Abschirmung 62 bzw. der entsprechenden Fläche der Schutzschicht 64 zu den Leitungen oder Kabeln 68. Somit ist in diesem Fall keine Gleitstrecke t gemäß den zuvor beschriebenen Ausführungsbeispielen erforderlich. Die Hälften 56, 57 stoßen also stumpf aneinander (siehe oben), ohne daß eine solche Gleitstrecke t erforderlich ist.

Dagegen ist bei der Erstellung von neuen Anlagen, d.h. wenn sowohl die Kabel oder Leitungen 68, als auch die schalenartigen Hälften 56, 57 miteinander verlegt werden und somit ein die Leitungen umgebendes Rohr 69 vorgesehen ist, dafür zu sorgen, daß keine Überschläge auf die Leitungen stattfinden. Hierzu wird auf die entsprechenden Ausführungen zu den Gleitstrecken in Fig. 1 bis 5 verwiesen. Im vorliegenden Beispiel zeigt die Ausführungsform gemäß Fig. 9 und 10 eine bevorzugte Möglichkeit der Schaffung einer solchen Gleitstrecke. Innerhalb der schalenförmigen Hälften 56, 57 ist ein Gleitschutz 71 vorgesehen, der ebenfalls aus zwei schalenartigen Hälften 72 besteht. Sie werden nach ihrem Legen um die Kabel oder Leitungen 68 miteinander an den Bereichen 73 verbunden, bevorzugt verklipst. Danach werden die schalenförmigen Hälften 56, 57, welche das eigentliche Kabelschutzrohr bilden, übergelegt. Die Verklipsungen oder dergleichen 73, 74 könnten gegebenenfalls im Bereich der abgewinkelten Ränder 58, 59 liegen. Es empfiehlt sich jedoch, sie demgegenüber um einen Winkel von etwa 90° um die Längsachse der Anordnung zu verdrehen (siehe Fig. 10), da sie andernfalls, d.h. bei ihrer Lage im Bereich der Stoßflächen 65, mit diesen zusammen im Fall einer etwaigen Überspannung den Überschlag ins Innere zu den Leitungen 68 hin ermöglichen, zumindest erleichtern könnten. Die Gleitschutzhälften 72 haben je einen umlaufenden Bund 74, an dem die Hälften des Kabelschutzrohres mit ihren Stirnkanten anstoßen. Von der Mittellinie 75 des Bundes 74 her erstrecken sich die Gleitschutzteile jeweils mindestens um den Betrag t in das Innere des zweiteiligen Kabelschutzrohres 56, 57 hinein. Auch hier gilt, daß t ≧ d, d.h. der Dicke der Kunststoffträgerschicht 60 sein soll. Fig. 9 zeigt im übrigen die Querschnittsausbildung gemäß Fig. 7, d.h. mit einer metallischen Abschirmung 62 und einem leitfähigen Kunststoffaußenmantel 63. Auch hier ist eine Abmantelung des Außenmantels 63 jeweils um den Bereich a erfolgt, so daß die Schelle 67 auf dem abgemantelten Kontaktbereich 70 der Abschirmung zur Auflage kommt.

Generell gilt für alle Ausführungsbeispiele, daß die erläuterten tragenden Schichten, Abschirmungen und Außenmäntel bzw. tragenden Schichten und hochleitfähige Schutzschicht grundsätzlich in verschiedener Weise erfolgen kann. Bevorzugte Verbindungsarten sind wie folgt:

Auf die tragende Kunststoffschicht entweder eines einstückigen Kabelschutzrohres 23 oder die tragende Kunststoffschicht 61 der Hälften 56, 57 wird in der Variante der Erfindung gemäß den Fig. 2 bis 4, 7, 9 und 10 die metallische Abschirmung 24 bzw. 62 um die tragende Kunststoffschicht maschinell herumgelegt, wobei sich ihre Längskanten etwas überlappen können. Diese. Folie kann gegebenenfalls perforiert sein. Hierauf wird der Außenmantel 25 bzw. 63 aus einem leitfähigen Kunststoff durch Extrudieren über den Außenmantel gespritzt. Beim Ausführungsbeispiel der Erfindung gemäß den Fig. 5, 5a und 8 wird zunächst ebenfalls die tragende Kunststoffschicht gemäß Rohr 23 bzw. Ziffer 61 der Hälften 56, 57 hergestellt. Danach wird die hochleitfähige Schutzschicht 24' ebenfalls durch Extrudieren auf die Kunststoffschicht 23 bzw. 61 aufgespritzt. Vorstehendes gilt sinngemäß für die Herstellung der Muffen 18 im Ausführungsbeispiel der Fig. 2 bis 4 einerseits und 5, 5a andererseits.

Für alle vorgenannten Ausführungsformen gilt, daß die Kabelschutzrohre bzw. die ein Kabelschutzrohr bildenden schalenartigen Hälften auch kürzere Abschnitte sein können, wobei deren eine Längsseite kürzer ist als deren andere Längsseite. Somit kann man durch Aneinandersetzen solcher Abschnitte Leitungen in Kurvenform verlegen (in der Zeichnung nicht dargestellt).

Aus Vorstehendem ergibt sich, daß man mit der Erfindung in praktikabler und funktionell einwandfreier Weise derartige Leitungsverbindungen vom Innern eines Gebäudes oder dergleichen zum Innern eines oder mehrerer anderer Gebäude oder dergleichen verlegen kann. Da sich derartige Verbindungen über größere Distanzen erstrecken können, ist es wichtig, daß die Erfindung eine ebenso praktikable wie funktionell einwandfreie elektrische und mechanische Kupplung der Leitungsabschnitte ermöglicht.

Alle dargestellten und beschriebenen Merkmale, sowie ihre Kombinationen untereinander, sind erfindungswesentlich.

## Patentansprüche

1. Kabelschutzanordnung für oder an eine im Erdboden zu verlegende und an Gebäuden (1, 2), Ziehkästen (3) oder dergleichen anschließbare Leitungsanordnung, die aus mehreren miteinander, sowie mit den Gebäuden, Ziehkästen oder dergleichen mechanisch und elektrisch verbindbaren Leitungsabschnitten (5 bis 8) besteht, wobei der einzelne Leitungsabschnitt aus zumindest einem Kabelschutzrohr (23) aus einem isolierenden Werkstoff, bevorzugt Kunststoff, und einem oder mehreren Leiter(n) oder Kabel(n) (31) besteht, der bzw. die in das Kabelschutzrohr eingebracht oder eingezogen sind, wobei das Kabelschutzrohr mit einer elektrisch leitfähigen, metallenen und blitzstromtragfähigen Abschirmung (24) versehen ist, die außenseitig von einer leitfähigen Schutzschicht (25) umgeben ist, dadurch gekennzeichnet, daß die elektrische Abschirmung (24) eine Folie ist, die von einem Außenmantel (25) aus einem elektrisch leitenden Kunststoff umgeben ist, daß an den der Verbindung dienenden Endbereichen jedes Kabelschutzrohres der Außenmantel und die Abschirmung über eine Länge (t) entfernt ist, die zumindest etwa zehnmal größer als die Wandstärke (d) des Kabelschutzrohres ist, daß daran anschließend ein Teil des Außenmantels (25) über einen kleineren Bereich (s) zur Bildung einer zylinderförmigen Kontaktfläche (32) entfernt ist, wobei die Kontaktfläche zur elektrischen Verbindung zum angrenzenden Kabelschutzrohr, Leitungsabschnitt, Gebäude, Ziehkasten oder dergleichen dient, und daß Mittel (37) zum entsprechenden Anschluß des freigelegten Bereiches (s) der Abschirmung (24) mit metallischen Abschirmungen vorgesehen sind.

2. Kabelschutzanordnung für oder an eine im Erdboden zu verlegende und an Gebäude (1, 2), Ziehkästen (3) oder dergleichen anschließbare Leitungsanordnung, die aus mehreren miteinander, sowie mit den Gebäuden, Ziehkästen oder dergleichen mechanisch und elektrisch verbindbaren Leitungsabschnitten (5 bis 8) besteht, wobei der einzelne Leitungsabschnitt aus zumindest einem Kabelschutzrohr (23) aus einem isolierenden Werkstoff, bevorzugt Kunststoff, und einem oder mehreren Leiter(n) oder Kabel(n) besteht, der bzw. die in das Kabelschutzrohr eingebracht oder eingezogen sind, wobei das Kabelschutzrohr außenseitig von einer elektrisch leitfähigen und blitzstromtragfähigen Abschirmung und von einer leitfähigen Schutzschicht umgeben ist, dadurch gekennzeichnet, daß eine, zugleich die Abschirmung und die Schutzschicht jedes Kabelschutzrohres (23) bildende Schutzschicht (24') aus einem hochleitfähigen Kunststoff vorgesehen ist, die in ihren Abmessungen und in ihrer spezifischen elektrischen Leitfähigkeit blitzstromtragfähig ausgebildet ist, daß an den der Verbindung dienenden Enden jedes Kabelschutzrohres ein Teil der vorgenannten Schutzschicht in der Form eines zylindrischen Abschnittes mit einer Länge (t) entfernt ist, die zumindest etwa zehnmal größer als die Wandstärke (d) des Kabelschutzrohres (23) ist, und daß der an den schutzschichtfreien Bereich anschließende Endbereich der Schutzschicht als Kontaktfläche (32) zur elektrischen Verbindung zum angrenzenden Kabelschutzrohr, Leitungsabschnitt, Gebäude (1, 2), Ziehkasten (3) oder dergleichen dient, wobei Mittel (37) zum Anschluß dieses Endbereiches der Schutzschicht vorgesehen sind.

3. Leitungsanordnung nach Anspruch 1 oder 2, dadurch gekennzeichnet, daß die elektrischen Anschlußmittel (37) zugleich als mechanische Verbindungsmittel, z.B. in Form einer aus leitfähigem Material bestehenden Rohrschelle, ausgebildet sind.

4. Leitungsanordnung nach Anspruch 1 oder 3, dadurch gekennzeichnet, daß zur Verbindung der Enden zweier Leitungsabschnitte (6, 7) deren Kabelschutzrohre (23) den gleichen Durchmesser haben und mit ihren Stirnflächen (26) in der Verbindungslage einander gegenüberliegen, daß eine aus isolierendem Material bestehende, hohlzylindrische Muffe (18) vorgesehen ist, deren Innendurchmesser gleich dem oder größer als der Außendurchmesser der Kabelschutzrohre ist derart, daß in der Verbindungslage die Kabelschutzrohre entweder bevorzugt mit Paßsitz oder über eine dazwischen liegende Dichtungseinlage in die Muffe eingesteckt sind, daß die Muffe außenseitig ebenfalls mit einer metallenen, leitenden und blitzstromtragfähigen Folie (33) und einem diese umgebenden Außenmantel (38) aus einem elektrischen leitenden Kunststoff oder mit einer blitzstromtragfähigen Schutzschicht (33') aus einem hochleitfähigen Kunststoff umgeben ist, die an den beiden Stirnenden der Muffe jeweils mit einem dem elektrischen Anschluß dienenden Bereich (34) herausgeführt ist, wobei dieser Bereich (34) den freigelegten Bereich der Abschirmung (24) oder der hochleitfähigen Schutzschicht (24') überlappt und damit mechanisch verklemmt sowie elektrisch verbunden ist.

5. Leitungsanordnung nach Anspruch 4, dadurch gekennzeichnet, daß die Muffe (18) innenseitig und in ihrer Längsrichtung betrachtet mittig gelegen einen Anschlag, bevorzugt einen umlaufenden Bund (27) aufweist, der zum Anschlag der Stirnflächen (26) der in die Muffe eingesteckten Kabelschutzrohre (23) dient.

6. Leitungsanordnung nach Anspruch 4 oder 5, dadurch gekennzeichnet, daß die halbe Muffenlänge bzw. der Abstand vom Anschlag (27) bis zur jeweils außen gelegenen Stirnfläche der Muffe in etwa der Länge (t) des Endbereiches des Kabelschutzrohres entspricht, von dem Abschirmung (24) und Außenmantel (25) oder die hochleitfähige Schutzschicht (24') entfernt sind.

7. Leitungsanordnung nach einem der Ansprüche 4 bis 6, dadurch gekennzeichnet, daß die von der Muffe vorragenden Bereiche (34) der Abschirmung (33) oder der hochleitfähigen Schutzschicht (33') geschlitzt und um einen gewissen Betrag in Richtung zum Innern des Kabelschutzrohres verlagert sind und dabei in Längsrichtung des Leitungsabschnittes verlaufend auf der Kontaktfläche (32) der Abschirmung (24) oder der hochleitfähigen Schutzschicht (33') des jeweiligen Kabelschutzrohres (23) aufliegen und damit verklemmt sind.

8. Leitungsanordnung nach einem der Ansprüche 4 bis 6, dadurch gekennzeichnet, daß die Bereiche (34) der Abschirmung (33) oder der hochleitfähigen Schutzschicht (33') der Muffe (18) aus dieser ohne Verlagerung nach innen herausgeführt und mit den Kontaktflächen (32) der Abschirmungen (24) oder der hochleitfähigen Schutzschicht (24') der Kabelschutzrohre leitend verklemmt sind.

9. Leitungsanordnung nach einem der Ansprüche 4 bis 8, dadurch gekennzeichnet, daß eine derartige Muffe oder ein Teilbereich einer solchen Muffe zur Einführung und Anbringung eines Leitungsabschnittes in ein Gebäude, einen Ziehkasten oder dergleichen vorgesehen ist.

10. Leitungsanordnung nach einem der Ansprüche 1 bis 9, dadurch gekennzeichnet, daß die Abschirmungen (24) oder hochleitfähigen Schutzschichten (24') der Kabelschutzrohre (23) und gegebenenfalls die Abschirmung (33) oder die hochleitfähige Schutzschicht (33') einer Muffe oder eines Teiles einer Muffe in einem Gebäude (1, 2), einem Ziehkasten (3) oder dergleichen mit deren Abschirmung oder Armierung (4, 12, 22, 55) verbunden sind.

11. Leitungsanordnung nach einem der Ansprüche 1, 3 bis 10, dadurch gekennzeichnet, daß lediglich das Ende eines Leitungsabschnittes mit über einen Teilbereich (s+t) entfernten Außenmantel (25) und über einen anderen Teilbereich (t) entfernter Abschirmung (24) des Kabelschutzrohres (23) eingeführt in ein Gebäude, Ziehkasten oder dergleichen und nach außen abgedichtet ist, wobei die freigelegte Abschirmung (32) z.B. über eine Rohrschelle (37, 51) mit einer Potentialausgleichsschiene (53), eine Armierung (55) oder dergleichen elektrisch leitend verbunden ist.

12. Leitungsanordnung nach einem der Ansprüche 1, 3 bis 11, dadurch gekennzeichnet, daß im Verlauf eines Kabelschutzrohres (23) dessen Außenmantel (25) über einen gewissen Bereich, insbesondere einen zylindrischen Ringabschnitt, entfernt und die hiermit freigelegte Abschirmung (24) mit einem Mittel zur elektrischen Kontaktierung verbunden ist.

13. Leitungsanordnung nach einem der Ansprüche 2 bis 9, dadurch gekennzeichnet, daß die elektrisch hochleitenden Kunststoffe, aus denen die Schutzschichten (24', 33') der Kabelschutzrohre und der Muffe gebildet sind, etwa die gleiche elektrische Leitfähigkeit haben.

14. Leitungsanordnung nach einem der Ansprüche 2 bis 9 oder 13, dadurch gekennzeichnet, daß lediglich das Ende eines Leitungsabschnittes mit der über einen Teilbereich (t) entfernten hochleitfähigen Schutzschicht (24') in ein Gebäude (1, 2), Ziehkasten (3) oder dergleichen eingeführt und nach außen abgedichtet ist, wobei der zum betreffenden Ende des Leitungsabschnittes gerichtete Endbereich der hochleitfähigen Schutzschicht z.B. über eine Rohrschelle (37, 51) mit einer Potentialausgleichsschiene (53), einer Armierung (55) oder dergleichen elektrisch leitend verbunden ist.

15. Kabelschutzanordnung für oder an eine im Erdboden zu verlegende und an Gebäude (1, 2), Ziehkästen (3) oder dergleichen anschließbare Leitungsanordnung, die aus mehreren miteinander sowie mit den Gebäuden, Ziehkästen oder dergleichen mechanisch und elektrisch verbindbaren Leitungsabschnitten (5 bis 8) besteht, wobei der einzelne Leitungsabschnitt aus zumindest einem Kabelschutzrohr (56, 57) aus einem isolierenden Werkstoff, bevorzugt Kunststoff, und einem oder mehreren Leiter(n) oder Kabel(n) (68) besteht, der oder die in das Kabelschutzrohr eingebracht oder eingezogen ist oder sind, wobei das Kabelschutzrohr außenseitig von einer elektrisch leitfähigen und blitzstromtragfähigen Abschirmung und von einer leitfähigen Schutzschicht umgeben ist, dadurch gekennzeichnet, daß die Kabelschutzrohre jeweils aus zwei schalenförmigen Hälften (56, 57) zusammengesetzt oder zusammensetzbar sind, die zusammengesetzt im Querschnitt etwa eine Kreisform bilden, daß lösbare Mittel (60) zum Halt der beiden Hälften (56, 57) aneinander vorgesehen sind, daß sich an den Enden der beiden Hälften Kontaktflächen (70) zur elektrischen Verbindung zum angrenzenden Kabelschutzrohr (56, 57), Leitungsabschnitt (5 bis 8), Gebäude (1, 2), Ziehkasten (3) oder dergleichen befinden, wobei entsprechende Mittel für diesen elektrischen Anschluß vorgesehen oder vorsehbar sind, und daß entweder die elektrische Abschirmung jeder Hälfte (56 bzw. 57) des hiervon gebildeten Kabelschutzrohres eine metallene, leitende und nach Querschnitt und spezifischer Leitfähigkeit blitzstromtragfähige Folie (62) ist, die von einem eine Schutzschicht bildenden Außenmantel (63) aus einem elektrisch leitenden Kunststoff umgeben ist, oder daß eine zugleich die Abschirmung und die Schutzschicht jeder der schalenförmigen Hälften (56 bzw. 57) eines Kabelschutzrohres bildende Schutzschicht (64) aus einem hochleitfähigen Kunststoff (64) vorgesehen ist, die in ihren Abmessungen und in ihrer spezifischen elektrischen Leitfähigkeit blitzstromtragfähig ausgebildet ist.

16. Kabelschutzanordnung nach Anspruch 15, dadurch gekennzeichnet, daß jede der schalenförmigen Häften (56, 57) an ihren Längsseiten mit Rändern in Form von Abwinkelungen (58, 59) versehen ist, die bei zusammengesetzten Hälften jeweils aneinander liegen.

17. Anordnung nach Anspruch 15 und 16, dadurch gekennzeichnet, daß als lösbare Haltemittel in sich federnde, auf die aneinander liegenden Abwinkelungen (58, 59) aufsteckbare Klammern vorgesehen sind.

18. Kabelschutzanordnung nach Anspruch 16 oder 17, dadurch gekennzeichnet, daß aneinander liegende Abwinkelungen (58, 59) jeweils mit Bohrungen (60a) versehen sind, die von Justier- und Arretierstiften, insbesondere Kunststoffspreiznieten, durchsetzt sind.

19. Kabelschutzanordnung nach einem der Ansprüche 15 bis 18, dadurch gekennzeichnet, daß jede der schalenförmigen Hälften (56, 57) eines Kabelschutzrohres aus einer tragenden Kunststoffschicht (61), der sich daran nach außen hin anschließenden metallischen Abschirmung aus einer Metallfolie (62) und einem die Folie von außen abdeckenden Außenmantel (63) aus einem elektrisch leitenden Kunststoff besteht.

20. Kabelschutzanordnung nach einem der Ansprüche 15 bis 18, dadurch gekennzeichnet, daß die schalenförmigen Hälften (56, 57) im Querschnitt aus einer tragenden Kunststoffschicht und einer die Kunststoffschichthälfte (61) von außen umgebenden Schutzschicht (64) aus einem hochleitfähigen Kunststoff bestehen.

21. Kabelschutzanordnung nach einem der Ansprüche 16 bis 20, dadurch gekennzeichnet, daß die Abwinkelungen (58, 59) an ihren einander zugewandten Flächen mit Aussparungen und Vorsprüngen (66) versehen sind, die bei zusammengesetzten Hälften (56, 57) des Kabelschutzrohres ineinander eingreifen.

22. Kabelschutzanordnung nach einem der Ansprüche 15 bis 21, dadurch gekennzeichnet, daß an den Enden der Hälften (56, 57) eines Kabelschutzrohres und bei Vorhandensein einer metallischen Abschirmung (62) und einem leitfähigen Außenmantel (63) dieser so weit abgemantelt ist, daß über eine genügende Kontaktbreite (a) die metallische Abschirmung (62) freiliegt.

23. Kabelschutzanordnung nach Anspruch 22, dadurch gekennzeichnet, daß metallische, bevorzugt aus Kupfer bestehende Schellen (67) vorgesehen sind, welche in ihrer Breite (b) der doppelten Breite (a) jeder Abmantelung entsprechen und zur elektrischen sowie mechanischen Verbindung über einander angrenzende Kontaktflächen (70) zweier benachbarter Kabelschutzrohrenden legbar und anklemmbar sind.

24. Kabelschutzanordnung nach einem der Ansprüche 15 bis 21 und 23, dadurch gekennzeichnet, daß bei Einsatz einer Schutzschicht (64) aus einem elektrisch hochleitfähigen Kunststoff die Schelle (67) um diese Kunststoffschicht (64) der aneinander stoßenden Enden zweier Kabelschutzrohre (56, 57) legbar und klemmbar ist.

25. Kabelschutzanordnung nach einem der Ansprüche 15 bis 24, dadurch gekennzeichnet, daß von der Stoßstelle zweier Kabelschutzrohre her sich in deren Innern erstreckend ein ebenfalls aus zwei schalenartigen Hälften bestehender, zusammengesetzt etwa hülsenförmiger Gleitschutz (71) gegen einen Spannungsüberschlag von der Stoßstelle der Kabelschutzrohre zu den in deren Innern befindlichen Leitungen oder Kabeln (68) vorgesehen ist.

26. Kabelschutzanordnung nach Anspruch 25, dadurch gekennzeichnet, daß die Hälften (72) des Gleitschutzes (71) an ihren in Längsrichtung des Kabelschutzrohres verlaufenden Stoßstellen (73) miteinander verbunden, z.B. verklipst sind.

27. Kabelschutzanordnung nach Anspruch 25 oder 26, dadurch gekennzeichnet, daß die Stoßstellen (73) des Gleitschutzes (71) gegenüber den Stoßstellen (65) der Abwinkelungen (58, 59) der Kabelschutzrohrhälften (56, 57) etwa um 90° um die Längsachse des Kabelschutzrohres versetzt sind.

28. Kabelschutzanordnung nach einem der Ansprüche 25 bis 27, dadurch gekennzeichnet, daß von der Stoßstelle der Kabelschutzrohre (56, 57) her sich die Gleitschutz-Hälften (72) jeweils mindestens um einen Betrag (t) in das Innere des zweigeteilten Kabelschutzrohres (56, 57) erstrecken, wobei der vorgenannte Betrag (t) größer oder gleich der Dicke (d) der tragenden Kunststoffschicht (61) ist.

29. Kabelschutzanordnung nach einem der Ansprüche 1 bis 28, dadurch gekennzeichnet, daß die Kabelschutzrohre (23) oder die ein Kabelschutzrohr bildenden schalenartigen Hälften (56, 57) relativ kurz sind, wobei eine ihrer Längsseiten kürzer ist als ihre andere Längsseite, und daß durch Aneinandersetzen solcher Kabelschutzrohre in Kurvenform verlaufende Leitungsabschnitte zusammengesetzt oder zusammensetzbar sind.

## Claims

1. A cable protection arrangement for or on a conduit arrangement to be laid underground and connectable to buildings (1, 2), pulling boxes (3) or the like, which consists of several conduit sections (5 to 8) which can be mechanically and electrically connected to one another, and also to the buildings, pulling boxes or the like, with the individual conduit section consisting of at least one cable protection duct (23) made from an insulating material, preferably plastics, and one or more conductor(s) or cable(s) (31), which are fed or drawn into the cable protection duct, with the cable protection duct being provided with an electrically conductive, metal and lightning current resistant shield (24), which on the outside is surrounded by a conductive protective coating (25),
**characterised in that** the electric shield (24) is a foil which is surrounded by an outer sheath (25) made from an electrically conductive plastic,
**in that** at the end regions of each cable protection duct serving for connection the outer sheath and the shield is removed over a length (t) which is at least ten times greater than the wall thickness (d) of the cable protection duct,
**in that** adjoining it a part of the outer sheath (25) is removed over a smaller region (s) to form a cylindrical contact surface (32), whereby the contact surface serves for the electrical connection to the adjacent cable. protection duct, conduit section, building, pulling box or the like,
**and in that** means (37) are provided for the corresponding connection of the exposed region (s) of the shield (24) with metallic shields.

2. A cables protection arrangement for or on a conduit arrangement to be laid underground and connectable to buildings (1, 2), pulling boxes (3) or the like, which consists of several conduit sections (5 to 8) which can be mechanically and electrically connected to one another, and also to the buildings, pulling boxes or the like, with the individually conduit section consisting of at least one cable protection duct (23) made from an insulating material, preferably plastics, and one or more conductor(s) or cable(s), which are fed or drawn into the cable protection duct, with the cable protection duct being surrounded on the outside by an electrically conductive and lightning current resistant shield and by a conductive protective coating,
**characterised in that** a protective coating (24') made from a highly conductive plastic and at the same time forming the shield and the protective coating of each cable protection duct (23) is provided, which in its dimensions and in its specific electric conductivity is constructed resistant to lightning current,
**in that** at the ends of each cable protection duct serving for the connection a part of the above-mentioned protective coating is removed in the form of a cylindrical section with a length (t), which is at least roughly ten times greater than the wall thickness (d) of the cable protection duct (23),
**and in that** the end region of the protective coating adjoining the region without a protective coating serves as contact surface (32) for the electrical connection to the adjacent cable protection duct, conduit section, building (1, 2), pulling boxes (3) or the like, wherein means (37) are provided to connect this end region of the protective coating.

3. A conduit arrangement according to Claim 1 or 2,
**characterised in that** the electrical connection means (37) are at the same time constructed as mechanical connection means, e.g. in the form of a pipe clamp made from conductive material.

4. A conduit arrangement according to Claim 1 or 3,
**characterised in that** for connecting the ends of two conduit sections (6, 7), their cable protection ducts (23) have the same diameter and with their end faces (26) lie opposite one another in the connection position,
**in that** a hollow cylindrical sleeve (18) made from insulating material is provided, the internal diameter of which is equal to or larger than the external diameter of the cable protection ducts so that in the connecting position the cable protection ducts are inserted either preferably with snug fit or via an intermediate sealing insert into the sleeve,
**in that** the sleeve on the outside is also surrounded with a metal, conductive and lightning current resistant foil (33) and an outer sheath (38) surrounding it made from an electrically conductive plastic or with a lightning current resistant protective coating (33') made from a highly conductive plastic, which at the two front ends of the sleeve in each case is passed out by a region (34) serving for the electrical connection, wherein this region (34) overlaps the exposed region of the shield (24) or of the highly conductive protective coating (24') and is mechanically clamped and also electrically connected therewith.

5. A conduit arrangement according to Claim 4,
**characterised in that** the sleeve (18) has on the inside and centrally when viewed in its longitudinal direction a stop, preferably a circumferential collar (27), which serves to stop the end faces (26) of the cable protection ducts (23) inserted into the sleeve.

6. A conduit arrangement according to Claim 4 or 5,
**characterised in that** half the sleeve length and respectively the distance from the stop (27) to the respective outer end face of the sleeve corresponds roughly to the length (t) of the end region of the cable protection duct from which the shield (24) and outer sheath (25) or the highly conductive protective coating (24') are removed.

7. A conduit arrangement according to one of Claims 4 to 6,
**characterised in that** the regions (34) of the shield (33) or of the highly conductive protective coating (33') protruding from the sleeve are slit and displaced by a certain amount towards the interior of the cable protection duct and at the same time extending in the longitudinal direction of the conduit section lie on the contact surface (32) of the shield (24) or of the highly conductive protective coating (33') of the respective cable protection duct (23) and are clamped therewith.

8. A conduit arrangement according to one of Claims 4 to 6,
**characterised in that** the regions (34) of the shield (33) or of the highly conductive protective coating (33') of the sleeve (18) are passed out thereof without inward displacement and are conductively clamped with the contact faces (32) of the shields (24) or of the highly conductive protective coating (24') of the cable protection ducts.

9. A conduit arrangement according to one of Claims 4 to 8,
**characterised in that** such a sleeve or a portion of such a sleeve is provided for introducing and mounting a conduit section in a building, pulling box or the like.

10. A conduit arrangement according to one of Claims 1 to 9,
**characterised in that** the shields (24) or highly conductive protective coatings (24') of the cable protection ducts (23) and where appropriate the shield (33) or the highly-conductive protective coating (33') of a sleeve or a part of a sleeve in a building (1, 2), a pulling box (3) or the like are connected to their shield or reinforcement (4, 12, 22, 55).

11. A conduit arrangement according to one of Claims 1, 3 to 10,
**characterised in that** only the end of a conduit section having the outer sheath (25) removed over a partial region (s+t) and the shield (24) of the cable protection duct (23) removed over another partial region (t) is introduced into a building pulling box or the like and externally sealed, with the exposed shield (32) being electrically conductively connected via a pipe clamp (37, 51) with an equipotential busbar (53), a reinforcement (55) or the like.

12. A conduit arrangement according to one of Claims 1, 3 to 11,
**characterised in that** in the extension of a cable protection duct (23) its outer sheath (25) is removed over a certain region, in particular a cylindrical annular section, and the shielding (24) exposed thereby is connected to a means for electrical contact.

13. A conduit arrangement according to one of Claims 2 to 9,
**characterised in that** the electrically highly conductive plastics from which the protective coatings (24', 33') of the cable protection ducts and the sleeve are formed, have roughly the same electric conductivity.

14. A conduit arrangement according to one of Claims 2 to 9 or 13,
**characterised in that** only the end of a conduit section with the highly conductive protective coating (24') removed over a partial region (t) is inserted into a building (1, 2), pulling box (3) or the like and externally sealed with the end region of the highly conductive protective coating directed towards the respective end of the conduit section being connected in an electrically conductive manner e.g. via a pipe clamp (37, 51) with an equipotential busbar (53), reinforcement (55) or the like.

15. A cable protection arrangement for or on a conduit arrangement to be laid underground and connectable to buildings (1, 2), pulling boxes (3) or the like, which consists of several conduit sections (5 to 8) which can be mechanically and electrically connected to one another and also to the buildings, pulling boxes or the like, with the individual conduit section consisting of at least one cable protection duct (56, 57) made of an insulating material, preferably plastics, and one or more conductor(s) or cable(s) (68), which is or are fed or drawn into the cable protection duct, with the cable protection duct being surrounded on the outside by an electrically conductive and lightning current resistant shield and by a conductive protective coating,
**characterised in that** the cable protection ducts in each case are assembled or can be assembled from two shell-shaped halves (56, 57), which when assembled in cross section form a roughly circular shape,
**in that** detachable means (60) are provided for retaining the two halves (56, 57) against one another,
**in that** at the ends of the two halves contact faces (70) are situated for the electrical connection to the adjacent cable protection duct (56, 57), conduit section (5 to 8), building (1, 2), pulling box (3) or the like, wherein corresponding means are provided or can be provided for this electrical connection,
**and in that** either the electrical shielding of each half (56 or 57 respectively) of the cable protection duct formed hereby is a metal, conductive foil (62), which is lightning current resistant with respect to cross section and specific conductivity and which is surrounded by an outer sheath (63) made of an electrically conductive plastic and forming a protective coating,
**or in that** a protective coating (64) made from a highly conductive plastic (64) and at the same time forming the shielding and the protective coating of each of the shell-shaped halves (56 and 57 respectively) of a cable protection duct is provided, which in its dimensions and in its specific electric conductivity is constructed to be resistant to lightning current.

16. A cable protection arrangement according to Claim 15,
**characterised in that** each of the shell-shaped halves (56, 57) is provided on its longitudinal sides with edges in the form of bent portions (58, 59), which when the halves are assembled in each case abut one another.

17. An arrangement according to Claim 15 and 16,
**characterised in that** clamps which can be placed on the adjacent intrinsically resilient bent portions (58, 59) are provided as detachable retention means.

18. A cable protection arrangement according to Claim 16 or 17,
**characterised in that** bent portions (58, 59) abutting one another are in each case provided with bores (60a), through which adjustment and retention pins, in particular body-bound rivets, pass.

19. A cable protection arrangement according to one of Claims 15 to 18,
**characterised in that** each of the shell-shaped halves (56, 57) of a cable protection duct consists of a supporting plastic layer (61), the metallic shielding next to it on the outside consisting of a metal foil (62), and an outer sheath made of an electrically conductive plastic externally covering the foil.

20. A cable protection arrangement according to one of Claims 15 to 18,
**characterised in that** the shell-shaped halves (56, 57), consist of in cross section a supporting plastic layer and a protective coating (64) made of a highly conductive plastic and externally surrounding the plastic layer half (61).

21. A cable protection arrangement according to one of Claims 16 to 20,
**characterised in that** the bent portions (58, 59) are provided at their surfaces faced towards one another with recesses and projections (66), which engage in one another when the halves (56, 57) of the cable protection duct are assembled.

22. A cable protection arrangement according to one of Claims 15 to 21,
**characterised in that** at the ends of the halves (56, 57) of one cable protection duct and in the presence of a metallic shield (62) and a conductive outer sheath (63) the latter is cut back to the extent that the metallic shield (62) is exposed over a sufficient contact width (a).

23. A cable protection arrangement according to Claim 22,
**characterised in that** metallic clamps (67) preferably made from copper are provided, which in their width (b) correspond to twice the width (a) of each cut-back portion and can be laid and clamped over adjoining contact faces (70) of two adjacent cable protection duct ends for the electrical and mechanical connection.

24. A cable protection arrangement according to one of Claims 15 to 21 and 23,
**characterised in that**, with the use of a protective coating (64) made from an electrically highly conductive plastic, the clamp (67) can be laid and clamped around this plastic coating (64) of the abutting ends of two cable protection ducts (56, 57).

25. A cable protection arrangement according to one of Claims 15 to 24,
**characterised in that** extending from the joint of two cable protection ducts in their interior a roughly sleeve-shaped sliding protective device (71) likewise consisting of two shell-shaped halves is provided against voltage spark-over from the joint of the cable protection ducts to the lines or cables (68) situated in their interior.

26. A cable protection arrangement according to Claim 25,
**characterised in that** the halves (72) of the sliding protection device (71) are connected, e.g. clipped, to one another at their joints (73) extending in the longitudinal direction of the cable protection duct.

27. A cable protection arrangement according to Claim 25 or 26,
**characterised in that** the joints (73) of the sliding protection device (71) are displaced roughly by 90° about the longitudinal axis of the cable protection duct in comparison with the joints (65) of the bent portions (58, 59) of the halves (56, 57) of the cable protection ducts.

28. A cable protection arrangement according to one of Claims 25 to 27,
**characterised in that** from the joint of the cable protection ducts (56, 57) the halves (72) of the sliding protection device in each case extend at least by the amount (t) into the interior of the cable protection duct (56, 57) divided into two, with the above-mentioned amount (t) being greater than or equal to the thickness (d) of the supporting plastic layer (61).

29. A cable protection arrangement according to one of Claims 1 to 28,
**characterised in that** the cable protection ducts (23) or the shell-shaped halves (56, 57) forming a cable protection duct are relatively short, with one of their long sides being shorter than their other long side,
**and in that** by placing such cable protection ducts next to one another sections extending in a curved shape are or can be assembled.

## Revendications

1. Dispositif de protection de câbles équipant ou destiné à équiper une installation de conduits à poser dans le sol, pouvant être connectée à des bâtiments (1, 2), à des coffres de tirage (3) ou éléments similaires, et constituée de plusieurs segments de conduits (5 à 8) pouvant être reliés mécaniquement et électriquement les uns aux autres, ainsi qu'aux bâtiments, coffres de tirage ou éléments similaires, le segment individuel de conduit se composant d'au moins un tube (23) protège-câbles en un matériau isolant, de préférence une matière plastique, et d'un ou plusieurs conducteur(s) ou câble(s) (31) respectivement intégré(s) ou inséré(s) dans le tube protège-câbles, le tube protège-câbles étant muni d'un blindage métallique (24) électriquement conducteur, résistant aux courants de foudre et entouré, extérieurement, d'une couche protectrice conductrice (25), caractérisé par le fait que le blindage électrique (24) est une feuille souple entourée d'une enveloppe extérieure (25) en une matière plastique électriquement conductrice ; par le fait que, dans les régions extrêmes de chaque tube protège-câbles, destinées à assurer la liaison, l'enveloppe extérieure et le blindage sont enlevés sur une longueur (t) au moins supérieure à environ le décuple de l'épaisseur de paroi (d) du tube protège-câbles ; par le fait que, dans la continuité directe, une partie de l'enveloppe extérieure (25) est dépouillée sur une petite zone (s), de manière à former une surface cylindrique de contact (32), la surface de contact servant à la connexion électrique avec le tube protège-câbles, le segment de conduit, le bâtiment, le coffre de tirage ou l'élément similaire occupant une position adjacente ; et par le fait que des moyens (37) sont prévus pour raccorder, de manière correspondante, la zone dépouillée (s) du blindage (24) à des blindages métalliques.

2. Dispositif de protection de câbles équipant ou destiné à équiper une installation de conduits à poser dans le sol, pouvant être connectée à des bâtiments (1, 2), à des coffres de tirage (3) ou éléments similaires, et constituée de plusieurs segments de conduits (5 à 8) pouvant être reliés mécaniquement et électriquement les uns aux autres, ainsi qu'aux bâtiments, coffres de tirage ou éléments similaires, le segment individuel de conduit se composant d'au moins un tube (23) protège-câbles en un matériau isolant, de préférence une matière plastique, et d'un ou plusieurs conducteur(s) ou câble(s) respectivement intégré(s) ou inséré(s) dans le tube protège-câbles, le tube protège-câbles étant extérieurement entouré par un blindage électriquement conducteur et résistant à des courants de foudre, et par une couche protectrice conductrice, caractérisé par le fait qu'il est prévu une couche protectrice (24') en une matière plastique à haute conductivité, formant simultanément le blindage et la couche protectrice de chaque tube (23) protège-câbles, et dont les dimensions et la conductivité électrique spécifique lui confèrent une résistance aux courants de foudre ; par le fait que, aux extrémités de chaque tube protège-câbles qui servent à assurer la liaison, une partie de la couche protectrice précitée est dépouillée sous la forme d'un tronçon cylindrique, présentant une longueur (t) au moins supérieure à environ le décuple de l'épaisseur de paroi (d) du tube (23) protège-câbles ; et par le fait que la région extrême de la couche protectrice, attenante à la région exempte de couche protectrice, sert de surface de contact (32) en vue de la connexion électrique avec le tube protège-câbles, le segment de conduit, le bâtiment (1, 2), le coffre de tirage (3) ou l'élément similaire occupant une position adjacente, des moyens (37) étant prévus pour le raccordement de cette région extrême de la couche protectrice.

3. Installation de conduits selon la revendication 1 ou 2, caractérisée par le fait que les moyens (37) de raccordement électrique sont simultanément réalisés en tant que moyens de solidarisation mécanique, par exemple sous la forme d'un collier de serrage consistant en un matériau conducteur.

4. Installation de conduits selon la revendication 1 ou 3, caractérisée par le fait que, en vue de solidariser les extrémités de deux segments de conduits (6, 7), les tubes (23) protège-câbles de ces derniers possèdent le même diamètre et sont disposés en vis-à-vis, par leurs faces extrêmes (26), dans la position solidarisée ; par le fait qu'il est prévu un manchon cylindrique creux (18) en un matériau isolant, dont le diamètre intérieur est égal ou supérieur au diamètre extérieur des tubes protège-câbles, de telle sorte que, dans la position solidarisée, les tubes protège-câbles soient emboîtés dans le manchon soit, de préférence, avec ajustement serré, soit par l'intermédiaire d'une garniture intégrée intercalaire d'étanchement ; et par le fait que le manchon est semblablement entouré, à l'extérieur, par une feuille souple métallique (33) conductrice et résistant à des courants de foudre, et par une enveloppe extérieure (38) entourant cette dernière et constituée d'une matière plastique électriquement conductrice, ou bien par une couche protectrice (33') en une matière plastique à haute conductivité, qui résiste aux courants de foudre et fait respectivement saillie, aux deux extrémités frontales du manchon, par une région (34) servant au raccordement électrique, cette région (34) chevauchant la région dépouillée du blindage (24) ou de la couche protectrice (24') hautement conductrice, sur laquelle elle est coincée mécaniquement et à laquelle elle est connectée électriquement.

5. Installation de conduits selon la revendication 4, caractérisée par le fait que le manchon (18) présente intérieurement, en un emplacement central par rapport à sa direction longitudinale, une butée préférentiellement constituée d'un collet périphérique (27) qui sert à offrir une butée aux faces extrêmes (26) des tubes (23) protège-câbles emboîtés dans ledit manchon.

6. Installation de conduits selon la revendication 4 ou 5, caractérisée par le fait que la demi-longueur du manchon ou, respectivement, la distance comprise entre la butée (27) et la face extrême considérée dudit manchon qui occupe une position extérieure, correspond sensiblement à la longueur (t) de la région extrême du tube protège-câbles dont le blindage (24) et l'enveloppe extérieure (25), ou la couche protectrice (24') hautement conductrice, sont enlevés.

7. Installation de conduits selon l'une des revendications 4 à 6, caractérisée par le fait que les régions (34) du blindage (33) ou de la couche protectrice (33') hautement conductrice, qui dépassent du manchon, sont fendues et sont décalées d'une certaine cote en direction de l'intérieur du tube protège-câbles, et sont alors appliquées, en s'étendant dans la direction longitudinale du segment de conduit, sur la surface de contact (32) du blindage (24) ou de la couche protectrice (33') hautement conductrice du tube considéré (23) protège-câbles, sur laquelle elles sont coincées.

8. Installation de conduits selon l'une des revendications 4 à 6, caractérisée par le fait que les régions (34) du blindage (33), ou de la couche protectrice (33') hautement conductrice du manchon (18), dépassent de ce dernier sans aucun décalage vers l'intérieur et sont en prise conductrice, par coincement, avec les surfaces de contact (32) des blindages (24) ou de la couche protectrice (24') hautement conductrice des tubes protège-câbles.

9. Installation de conduits selon l'une des revendications 4 à 8, caractérisée par le fait qu'un manchon de ce type, ou une région partielle d'un tel manchon, est prévu(e) pour l'introduction et le montage d'un segment de conduit dans un bâtiment, un coffre de tirage ou un élément similaire.

10. Installation de conduits selon l'une des revendications 1 à 9, caractérisée par le fait que les blindages (24) ou les couches protectrices (24') hautement conductrices des tubes (23) protège-câbles, et éventuellement le blindage (33) ou la couche protectrice (33') hautement conductrice d'un manchon, ou d'une partie d'un manchon, sont reliés, dans un bâtiment (1, 2), un coffre de tirage (3) ou un élément similaire, au blindage ou à l'armature (4, 12, 22, 55) de ce dernier.

11. Installation de conduits selon l'une des revendications 1, 3 à 10, caractérisée par le fait que seule l'extrémité d'un segment de conduit dont l'enveloppe extérieure (25) du tube (23) protège-câbles est enlevée sur une région partielle (s + t), et dont le blindage (24) dudit tube est enlevé sur une autre région partielle (t), est introduite dans un bâtiment, un coffre de tirage ou un élément similaire et est rendue étanche vers l'extérieur, le blindage dépouillé (32) étant en liaison électriquement conductrice, par exemple par l'intermédiaire d'un collier de serrage (37, 51), avec un rail (53) de compensation de potentiel, une armature (55) ou un élément analogue.

12. Installation de conduits selon l'une des revendications 1, 3 à 11, caractérisée par le fait que, sur l'étendue d'un tube (23) protège-câbles, l'enveloppe extérieure (25) de celui-ci est enlevée sur une certaine région, notamment sur un tronçon annulaire cylindrique, et le blindage (24) ainsi dépouillé est relié à un moyen de mise en contact électrique.

13. Installation de conduits selon l'une des revendications 2 à 9, caractérisée par le fait que les matières plastiques à haute conductivité électrique, dont sont formées les couches protectrices (24', 33') des tubes protège-câbles et du manchon, présentent sensiblement la même conductivité électrique.

14. Installation de conduits selon l'une des revendications 2 à 9 ou 13, caractérisée par le fait que seule l'extrémité d'un segment de conduit dont la couche protectrice (24'), hautement conductrice, est enlevée sur une région partielle (t), est introduite dans un bâtiment (1, 2), un coffre de tirage (3) ou un élément similaire et est rendue étanche vers l'extérieur, la région extrême de la couche protectrice hautement conductrice, dirigée vers l'extrémité considérée du segment de conduit, étant en liaison électriquement conductrice, par exemple par l'intermédiaire d'un collier de serrage (37, 51), avec un rail (53) de compensation de potentiel, une armature (55) ou un élément analogue.

15. Dispositif de protection de câbles équipant ou destiné à équiper une installation de conduits à poser dans le sol, pouvant être connectée à des bâtiments (1, 2), à des coffres de tirage (3) ou éléments similaires, et constituée de plusieurs segments de conduits (5 à 8) pouvant être reliés mécaniquement et électriquement les uns aux autres, ainsi qu'aux bâtiments, coffres de tirage ou éléments similaires, le segment individuel de conduit se composant d'au moins un tube (56, 57) protège-câbles en un matériau isolant, de préférence une matière plastique, et d'un ou plusieurs conducteur(s) ou câble(s) (68) respectivement intégré(s) ou inséré(s) dans le tube protège-câbles, le tube protège-câbles étant extérieurement entouré par un blindage électriquement conducteur et résistant à des courants de foudre, et par une couche protectrice conductrice, caractérisé par le fait que les tubes protège-câbles sont ou peuvent être assemblés à partir de deux moitiés respectives (56, 57) en forme de coquilles qui donnent naissance, à l'état assemblé, à une configuration sensiblement circulaire en coupe transversale ; par le fait que des moyens amovibles (60) sont prévus pour retenir les deux moitiés (56, 57) l'une sur l'autre ; par le fait que des surfaces de contact (70) se trouvent aux extrémités des deux moitiés, pour assurer la connexion électrique avec le tube (56, 57) protège-câbles, le segment de conduit (5 à 8), le bâtiment (1, 2), le coffre de tirage (3) ou l'élément similaire occupant une position adjacente, des moyens correspondants étant ou pouvant être prévus pour ce raccordement électrique ; et par le fait que le blindage électrique de chaque moitié (56, respectivement 57) du tube protège-câbles, formé par cette dernière, est une feuille souple (62) métallique et conductrice, dont la section transversale et la conductivité spécifique lui confèrent une résistance aux courants de foudre, et qui est entourée par une enveloppe extérieure (63) en une matière plastique électriquement conductrice, formant une couche protectrice ; ou bien par le fait qu'il est prévu une couche protectrice (64) en une matière plastique (64) à haute conductivité, qui forme simultanément le blindage et la couche protectrice de chacune des moitiés (56, respectivement 57) en forme de coquilles d'un tube protège-câbles, et dont les dimensions et la conductivité électrique spécifique lui confèrent une résistance aux courants de foudre.

16. Dispositif de protection de câbles, selon la revendication 15, caractérisé par le fait que chacune des moitiés (56, 57) en forme de coquilles est pourvue, sur ses côtés longitudinaux, de bords revêtant la forme de coudes (58, 59) portant respectivement les uns contre les autres lorsque les moitiés sont assemblées.

17. Dispositif selon les revendications 15 et 16, caractérisé par le fait que des agrafes douées par elles-mêmes d'élasticité, pouvant être emboîtées sur les coudes (58, 59) portant les uns contre les autres, sont prévues en tant que moyens amovibles de retenue.

18. Dispositif de protection de câbles, selon la revendication 16 ou 17, caractérisé par le fait que des coudes (58, 59) portant les uns contre les autres sont respectivement munis de trous (60a) qui sont traversés par des tétons d'ajustement et d'arrêt, notamment des rivets expansibles en matière plastique.

19. Dispositif de protection de câbles, selon l'une des revendications 15 à 18, caractérisé par le fait que chacune des moitiés (56, 57) en forme de coquilles d'un tube protège-câbles comprend une couche de support (61) en matière plastique, le blindage métallique en une feuille métallique (62), occupant une position adjacente vers l'extérieur, et une enveloppe extérieure (63) en une matière plastique électriquement conductrice, qui recouvre la feuille de l'extérieur.

20. Dispositif de protection de câbles, selon l'une des revendications 15 à 18, caractérisé par le fait que les moitiés (56, 57) en forme de coquilles se composent, en coupe transversale, d'une couche de support en matière plastique et d'une couche protectrice (64) en une matière plastique à haute conductivité qui entoure, de l'extérieur, la moitié (61) de la couche en matière plastique.

21. Dispositif de protection de câbles, selon l'une des revendications 16 à 20, caractérisé par le fait que les coudes (58, 59) sont munis, sur leurs surfaces tournées les unes vers les autres, d'échancrures et de protubérances (66) s'interpénétrant à l'état assemblé des moitiés (56, 57) du tube protège-câbles.

22. Dispositif de protection de câbles, selon l'une des revendications 15 à 21, caractérisé par le fait que, sur les extrémités des moitiés (56, 57) d'un tube protège-câbles, et en présence d'un blindage métallique (62) et d'une enveloppe extérieure conductrice (63), cette dernière est dénudée de telle sorte que le blindage métallique (62) soit dépouillé sur une largeur de contact suffisante (a).

23. Dispositif de protection de câbles, selon la revendication 22, caractérisé par la présence de colliers métalliques (67) consistant préférentiellement en du cuivre, dont la largeur (b) correspond au double de la largeur (a) de chaque région dénudée, et pouvant être plaqués et bloqués, en vue de la liaison tant électrique que mécanique, sur des surfaces de contact (70), mutuellement limitrophes, de deux extrémités d'un tube protège-câbles qui occupent des positions voisines.

24. Dispositif de protection de câbles, selon l'une des revendications 15 à 21 et 23, caractérisé par le fait que, lorsqu'on utilise une couche protectrice (64) en une matière plastique à haute conductivité électrique, le collier (67) peut être plaqué et bloqué autour de cette couche (64) en matière plastique des extrémités aboutées de deux tubes (56, 57) protège-câbles.

25. Dispositif de protection de câbles, selon l'une des revendications 15 à 24, caractérisé par le fait qu'une protection glissante (71) sensiblement en forme de douille à l'état assemblé, pareillement constituée de deux moitiés du type coquilles, est prévue à partir de la zone d'aboutement de deux tubes protège-câbles dans l'espace interne desquels elle s'étend, pour empêcher une décharge de tension depuis la zone d'aboutement desdits tubes protège-câbles jusqu'aux conducteurs ou câbles (68) logés dans l'espace interne de ces derniers.

26. Dispositif de protection de câbles, selon la revendication 25, caractérisé par le fait que les moitiés (72) de la protection glissante (71) sont reliées l'une à l'autre, par exemple enclipsées dans leurs zones de rencontre (73) s'étendant dans la direction longitudinale du tube protège-câbles.

27. Dispositif de protection de câbles, selon la revendication 25 ou 26, caractérisé par le fait que les zones de rencontre (73) de la protection glissante (71) sont décalées d'environ 90°, autour de l'axe longitudinal du tube protège-câbles, par rapport aux zones de rencontre (65) des coudes (58, 59) des moitiés (56, 57) dudit tube protège-câbles.

28. Dispositif de protection de câbles, selon l'une des revendications 25 à 27, caractérisé par le fait que les moitiés (72) de la protection glissante pénètrent, respectivement, d'au moins une cote (t) dans l'espace interne du tube (56, 57) protège-câbles scindé en deux, à partir de la zone d'aboutement des tubes (56, 57) protège-câbles, la cote précitée (t) étant supérieure ou égale à l'épaisseur (d) de la couche de support (61) en matière plastique.

29. Dispositif de protection de câbles, selon l'une des revendications 1 à 28, caractérisé par le fait que les tubes (23) protège-câbles ou les moitiés (56, 57) du type coquilles, formant un tube protège-câbles, sont relativement court(e)s, l'un de leurs côtés longitudinaux étant plus court que leur autre côté longitudinal ; et par le fait que des segments de conduits, s'étendant sous une forme curviligne, sont ou peuvent être assemblés par aboutement de tels tubes protège-câbles.
